# EUROPÄISCHE PATENTSCHRIFT

(11) **EP 2 906 864 B1**
(45) Veröffentlichungstag und Bekanntmachung des Hinweises auf die Patenterteilung: **02.12.2020**
(21) Anmeldenummer: 13780314.4
(22) Anmeldetag: 14.10.2013
(51) Int. Cl.: F16L 53/38

(54) **ELEKTRISCH BEHEIZBARE MEDIENLEITUNG SOWIE VERFAHREN ZUM HERSTELLEN EINER SOLCHEN**
ELECTRICALLY HEATABLE MEDIA LINE, AND METHOD FOR PRODUCING SUCH A MEDIA LINE
CONDUIT DE FLUIDES APTE À ÊTRE CHAUFFÉ ÉLECTRIQUEMENT ET PROCÉDÉ DE FABRICATION D'UN TEL CONDUIT

(30) Priorität: 12.10.2012 DE 102012020055
(43) Veröffentlichungstag der Anmeldung: 19.08.2015
(73) Patentinhaber: Voss Automotive GmbH, 51688 Wipperfürth (DE)
(72) Erfinder: WESTMEIER, Jörg, 40468 Düsseldorf (DE); DE BEER, Daniel, 51766 Engelskirchen (DE); SCHWARZKOPF, Otfried, 51515 Kürten (DE)
(74) Vertreter: Rebbereh, Cornelia
(86) Internationale Anmeldenummer: PCT/EP2013/003090
(87) Internationale Veröffentlichungsnummer: WO 2014/056628

(56) Entgegenhaltungen:
- DE-A1-102010 026 827
- DE-A1-102010 051 550
- DE-U1-202007 018 089
- DE-U1-202008 013 048
- US-A- 3 636 285
- US-A- 5 007 839
- US-A1- 2010 206 415

## Beschreibung

Die Erfindung betrifft eine elektrisch beheizbare Medienleitung mit einer Rohrleitung mit zumindest zwei in deren Wandung eingebetteten elektrischen Leitern, elektrischen Zuleitern und mit zumindest einer fluidischen Anschlusskontur, wobei die Anschlusskontur um die Rohrleitung zusammen mit den elektrischen Leitern und Konnektierungsstellen an den elektrischen Leiter, die dem Verbinden mit elektrischen Zuleitern dienen, angeordnet ist, sowie ein Verfahren zum Herstellen einer solchen elektrisch beheizbaren Medienleitung mit zumindest einer Anschlusskontur.

Elektrisch beheizbare Medienleitungen sowie Verfahren zum Herstellen von diesen sind im Stand der Technik bekannt. Beispielsweise offenbart die DE 10 2010 051 550 A1 eine konfektionierte elektrisch beheizbare Medienleitung mit zumindest einem Rohrleitungsteil mit integrierter elektrisch leitfähiger Einrichtung und mit zumindest einer Verbindungseinrichtung, insbesondere Stecker-, Schraub- oder Kupplungseinrichtung. Der Rohrleitungsteil und die elektrisch leitfähige Einrichtung erstrecken sich bis zum oder bis nah an das dem Rohrleitungsteil abgewandte Ende der Verbindungseinrichtung oder bis nahe an, vor oder in eine Anschlusskontur. Zum Herstellen der Medienleitung wird der Rohrleitungsteil mit der elektrisch leitfähigen Einrichtung versehen, in einem Endbereich des Rohrleitungsteils die integrierte elektrisch leitfähige Einrichtung, d.h. deren Kontaktleiter, freigelegt, dauerhaft durch eine Kontaktierungseinrichtung elektrisch kontaktiert und die Kontaktierungseinrichtung zum Anschluss an eine elektrische Energiequelle auf die Außenseite des Rohrleitungsteils herausgeführt. Die Verbindungseinrichtung wird auf den Endbereich des Rohrleitungsteils aufgefügt oder durch Urformen oder Stoffschluss an- oder aufgefügt. Nach dem Freilegen der innenliegenden integrierten leitfähigen Einrichtungen, die in Form von elektrischen Leitern oder Heizleitern offenbart sind, werden diese mit Anschlusselementen verbunden, die nach dem Versehen des Endbereichs des Rohrleitungsteils mit der Verbindungskontur auf deren Außenseite herausragen, um dort mit einem

### BESTÄTIGUNGSKOPIE

Anschlussstecker oder einer anderen Anschlusseinrichtung verbunden zu werden.

Mit dem in diesem Stand der Technik beschriebenen Aufbau der beheizbaren Medienleitung ist insbesondere im Bereich der Kontaktierungseinrichtung, also der elektrischen Zuleiter zu der elektrisch leitfähigen Einrichtung der Rohrleitung, nicht sichergestellt, dass nach dem Aufbringen der Anschlusskontur bzw. der Verbindungseinrichtung tatsächlich eine dichte Verbindung geschaffen werden kann. Sofern die Verbindung nicht vollständig dicht ist bzw. im Betrieb bleibt, was aufgrund von Schwingungen und Thermoschock verursacht werden kann, können die durch die Rohrleitung strömenden Medien und/oder sich insbesondere bei Temperaturschwankungen bildendes Kondenswasser in den elektrischen Teil der beheizbaren Medienleitung gelangen und dort einerseits zu Korrosion und andererseits zum Ausfall der elektrischen Beheizbarkeit der Medienleitung führen. Unter einem Thermoschock wird eine schnelle, schockartige Veränderung der Temperatur in der Anschlusskontur verstanden, die zu mechanischen Spannungen zwischen dem äußeren und inneren Teil der Anschlusskontur führt, da die Wärme zur oder von der Oberfläche schneller übertragen bzw. abgeführt wird als zum Inneren. Übersteigen die so entstehenden Spannungen einen kritischen Wert, kommt es zur Schädigung des Materials.

Der vorliegenden Erfindung liegt daher die Aufgabe zugrunde, eine beheizbare Medienleitung nach dem Oberbegriff des Anspruchs 1 sowie ein Verfahren zum Herstellen einer solchen beheizbaren Medienleitung umfassend zumindest eine Anschlusskontur dahingehend fortzubilden, dass die elektrischen Zuleiter zu den elektrischen Leitern als der elektrisch leitfähigen Einrichtung der Rohrleitung bzw. der Medienleitung sowie diese als medienführender Teil absolut dicht gegenüber dem durch die Rohrleitung bzw. Medienleitung strömbaren oder strömenden Medium sowie gegen Umwelteinflüsse, wie Feuchtigkeit, innerhalb der Anschlusskontur aufgenommen sind oder werden.

Die Aufgabe wird für eine elektrisch beheizbare Medienleitung mit den Merkmalen des Anspruchs 1 gelöst.

Für ein Verfahren zum Herstellen einer elektrisch beheizbaren Medienleitung umfassend zumindest eine Anschlusskontur wird die Aufgabe dadurch gelöst, dass eine Rohrleitung mit zumindest zwei eingebetteten elektrischen Leitern vorgesehen und abgelängt wird, die elektrischen Leiter freigelegt werden, elektrische Zuleiter mit den freigelegten Leitern stoffschlüssig verbunden werden, die Rohrleitung mit angebrachten elektrischen Zuleitern in ein Spritzgusswerkzeug positioniert eingelegt werden, und eine fluidische und elektrische Anschlusskontur im Spritzgusswerkzeug erzeugt wird, wobei die Rohrleitungswandung mit der durch endseitiges stoffschlüssiges Umspritzen aufgebrachten Anschlusskontur auch stirnseitig umschlossen und abgedichtet wird und die Anschlusskontur einen Abschnitt der elektrischen Zuleiter dicht umschließt. Weiterbildungen der Erfindung sind in den abhängigen Ansprüchen definiert.

Dadurch wird eine beheizbare Medienleitung geschaffen, bei der zunächst die in die vorteilhaft mehrschichtige Wandung der Rohrleitung integrierte elektrisch leitfähige Einrichtung in Form zumindest zweier dort eingebetteter elektrischer Leiter an der gewünschten Kontaktierungsstelle bzw. in dem gewünschten Kontaktierungsbereich freigelegt, mit den elektrischen Zuleitern stoffschlüssig verbunden und in das Spritzgusswerkzeug in der gewünschten bzw. geeigneten Positionierung, also positioniert, eingelegt wird. Die in die Rohrleitungswandung integrierten elektrischen Leiter sind vorteilhaft Kontaktleiter, die in eine elektrisch leitfähige Schicht, insbesondere bestehend aus einem Polymermaterial, integriert sind, wodurch eine Beheizbarkeit der Schicht bzw. der Rohrleitung, also der Medienleitung, durch die Medium strömen kann, ermöglicht wird. Der stoffschlüssige Verbund der elektrischen Leiter der Rohrleitung mit den elektrischen Zuleitern kann beispielsweise durch Anlöten oder Anschweißen erfolgen. Die elektrischen Zuleiter können dabei direkt mit den elektrischen Leitern der Rohrleitung stoffschlüssig verbunden werden oder indirekt unter Zwischenfügen eines oder mehrerer Leitungsabschnitte, die beispielsweise als Kriechsperrelemente dienen können, wie weiter unten noch ausführlich beschrieben werden wird. Unter einer stoffschlüssigen Verbindung der elektrischen Zuleiter und der elektrischen Leiter der Rohrleitung wird vorliegend somit sowohl eine direkte als auch eine indirekte Verbindung über ein oder mehrere ggf. zwischen elektrische Zuleiter und elektrische Leiter zwischengefügte Leitungsabschnitte verstanden.

Die mit den elektrischen Zuleitern versehene Rohrleitung wird in der gewünschten Ausrichtung und Positionierung ihrer selbst und der elektrischen Zuleiter in das Spritzgusswerkzeug eingelegt. Die aus dem Spitzgusswerkzeug herausragenden Abschnitte von Rohrleitung und insbesondere elektrischen Zuleitern werden durch das Spritzgusswerkzeug nach außen abgedichtet. Es erfolgt das stoffschlüssige Umspritzen von Rohrleitung und elektrischen Zuleitern bzw. dem innerhalb des Spritzgusswerkzeugs liegenden Abschnitts der elektrischen Zuleiter mit zumindest einer Spritzgussmasse zum Ausbilden der Anschlusskontur. Unter einer Anschlusskontur wird hier eine außenseitig beliebig konturierte Anschlusseinrichtung zum Anschließen an eine andere Einrichtung verstanden. Beim stoffschlüssigen Umspritzen wird ein stoffschlüssiger Verbund der jeweils aufgeschmolzenen Grenzflächen der Verbindungspartner verstanden, also von Rohrleitung und Anschlusskontur und von elektrischen Zuleitern und Anschlusskontur. Die elektrischen Zuleiter weisen zumindest eine Litze mit zumindest einer äußeren Ummantelung als Isolierung auf, wobei deren Außenseite beim Umspritzen aufgeschmolzen wird und einen stoffschlüssigen Verbund mit der Spritzgussmasse eingeht. Dies ist beim Stand der Technik beispielsweise der DE 10 2010 051 550 A1 nicht möglich bzw. zumindest nicht vorgesehen. Dort ist ein mit elektrischen Anschlussleitungen versehener Anschlussstecker oder eine andere Anschlusseinrichtung vorgesehen, der oder die mit Anschlusselementen verbunden werden kann, die nach dem Versehen des Endbereichs des Rohrleitungsteils mit der Verbindungskontur auf deren Außenseite herausragen. Es ist also kein stoffschlüssiges Umspritzen der elektrischen Anschlussleitungen bzw. elektrischen Zuleiter in diesem Stand der Technik vorgesehen. Durch das stoffschlüssige Umspritzen sowohl der Rohrleitung als auch der mit deren elektrischen Leitern verbundenen Zuleiter, also das Schaffen einer stoffschlüssigen Verbindung mit der erzeugten Anschlusskontur, wird auf einfache Art und Weise eine gegen das Eindringen von Feuchtigkeit und/oder Medium dichte Ummantelung für Rohrleitung und elektrische Zuleiter durch die entstehende Anschlusskontur geschaffen. Hierbei werden die elektrischen Kontaktstellen durch das Material der Umspritzung, das die Anschlusskontur bildet, nach außen abgedichtet bzw. versiegelt. Die Rohrleitung ist durch das endseitige Umschließen mit der durch Umspritzen aufgebrachten Anschlusskontur auch stirnseitig abgedichtet bzw. versiegelt. Durch das Abdichten kann das Eindringen von Feuchtigkeit in das Innere der Anschlusskontur auch bei Schwingungen oder starken Temperaturschwankungen/Thermoschock, denen die beheizbare Medienleitung am Einbauort im Betrieb ausgesetzt wird, beispielsweise beim Einbau in ein Fahrzeug, wie einen Pkw oder Lkw, wobei Kondenswasserbildung insbesondere bei Temperaturschwankungen/ Thermoschock auftreten kann, erfolgreich verhindert werden. Unter dem Begriff "dicht" wird hier nachfolgend somit eine Dichtigkeit gegen das Eindringen von Feuchtigkeit und/oder Medium in das Innere der Anschlusskontur verstanden. Die Anschlusskontur ummantelt sowohl den medienführenden Teil, also die Rohrleitung, ist daher eine fluidische Anschlusskontur, als auch den elektrischen Teil, also die elektrischen Zuleiter, ist somit ebenfalls eine elektrische Anschlusskontur. Die Anschlusskontur vereint in sich also sowohl eine fluidische als auch eine elektrische Anschlusskontur. Es entsteht beim Umspritzen unter minimalem Aufwand eine kompakte dichte Einheit in Form der Anschlusskontur, die den medienführenden und den elektrischen Teil dichtend ummantelt und eine äußere Formgebung aufweisen kann, die sich nach Kundenwünschen bzw. dem jeweiligen Anwendungsfall richten kann. Die Anschlusskontur dient insbesondere zum Anschließen der beheizbaren Medienleitung an ein Aggregat, eine andere Leitung oder eine entsprechende Gegenkontur. Sie kann dementsprechend mit einem Anschlussstecker oder einer Anschlusseinrichtung des Aggregats oder der Gegenkontur verbunden werden. Das Erzeugen eines Stoffschlusses zwischen einer äußeren Ummantelung der elektrischen Zuleiter und der Anschlusskontur führt für die elektrischen Zuleiter ferner zu einer Zugentlastung, so dass deren Beschädigung auch bei von außen angreifenden Kräften soweit wie möglich vermieden werden kann.

Die Rohrleitung der beheizbaren Medienleitung weist eine Rohrwandung auf, die ein Innenlumen umgibt, durch das Medium strömen kann. Die Rohrwandung ist vorteilhaft mehrschichtig ausgebildet und weist insbesondere zumindest eine innere das Innenlumen der Rohrleitung umgrenzende vorteilhaft medienbeständige Innenschicht und darüber eine ein- oder mehrlagige elektrisch leitfähige Schicht mit den eingebetteten elektrischen Leitern auf. Die Innenschicht ist vorteilhaft medienbeständig, um ein Zersetzen und dementsprechend einen Durchtritt der teilweise aggressiven durch das Innenlumen strömenden Medien durch die Innenschicht und Gelangen zu den elektrischen Leitern zu verhindern, da ansonsten deren Korrosion und in der Folge der Ausfall der Beheizungsmöglichkeit der Medienleitung droht. Die elektrischen Leiter können in einer gewünschten radialen und/oder axialen Lage bzw. Position bzgl. der leitfähigen Schicht und mit einer vorab festgelegten Steigung in Bezug auf die Längsachse der Rohrleitung angeordnet werden. Vorteilhaft sind die elektrischen Leiter auf zumindest einer leitfähigen Schicht angeordnet und von zumindest einer weiteren leitfähigen Schicht als Deckschicht überdeckt. Auf der zumindest einen leitfähigen Deckschicht kann eine ein- oder mehrlagige äußere Schicht aufgebracht werden oder sein, insbesondere in Form einer elektrischen und/oder thermischen Isolationsschicht.

Die Rohrleitung weist vorteilhaft eine außenseitige Rippenstruktur oder Wellenkontur auf. Diese wird weiter vorteilhaft dadurch erzeugt, dass die Rohrleitungswandung auf ihrer Außenseite, also der dem Innenlumen der Rohrleitung, durch das Medium strömen kann, gegenüberliegenden Seite, entlang dem Verlauf der elektrischen Leiter erhaben vorkragende Rippen bildet, die durch die elektrischen Leiter entstehen. Ferner ist es möglich, dass die Rohrleitungswandung auf ihrer Außenseite, also der dem Innenlumen der Rohrleitung, durch das Medium strömen kann, gegenüberliegenden Seite, Rillen bildet, die dem Verlauf der elektrischen Leiter folgen. Durch Rippen oder Rillen entsteht auf der Außenseite der Rohrleitung eine der Anordnung der elektrischen Leiter entsprechende Rippenstruktur bzw. Wellenkontur mit Hinterschnitten in axialer Zugrichtung der Anschlusskontur bzw. in Richtung von deren axialer Erstreckung. Diese dient dem Schaffen eines zusätzlichen Formschlusses mit der Anschlusskontur, die auf die Außenseite der Rohrleitung aufgespritzt wird. Die Rippenstruktur wird im einzelnen dadurch erzeugt, dass die elektrisch leitfähige Deckschicht, die über der Bewicklung der darunter angeordneten elektrisch leitfähigen Schicht der Rohrleitung mit den elektrischen Leitern aufgebracht wird, während des Aufbringens so behandelt wird, dass diese sich folienartig auf der Außenseite sowohl der Leiter als auch der Schicht der Rohrleitung, auf der die Leiter angeordnet sind, anlegt. Dies kann beispielsweise durch Erzeugen eines Vakuums um die Rohrleitung herum während des Auftragens der elektrisch leitfähigen Deckschicht erfolgen, so dass sich die elektrisch leitfähige Deckschicht eng an der Oberfläche sowohl der elektrischen Leiter als auch der inneren Schicht, auf der diese positioniert sind, anlegt. Insbesondere ist es möglich, die Rippenstruktur durch Schlauchextrusion zu erzeugen.

Anstelle einer Schlauchextrusion kann eine Druckextrusion zum Ummanteln der Rohrleitung verwendet werden, wobei sich die bereits erwähnte Wellenkontur mit Rillen ergibt, die sich entlang dem Verlauf der elektrischen Leiter erstrecken.

Vorteilhaft umfasst die elektrisch leitfähige Schicht, wie bereits erwähnt, zumindest zwei Schichten, eine erste leitfähige Schicht, auf der die elektrischen Leiter angeordnet werden, und eine elektrisch leitfähige Deckschicht zum Abdecken der elektrischen Leiter. Die erste leitfähige Schicht ist vorteilhaft im Vergleich zu der elektrisch leitfähigen Deckschicht dünner und kann als Schichtdicke insbesondere 0,1 bis 0,2 mm betragen. Die elektrisch leitfähige Deckschicht weist vorteilhaft eine etwa dem äußeren Durchmesser der elektrischen Leiter entsprechende Schichtdicke auf, insbesondere etwas mehr als dem Außendurchmesser der elektrischen Leiter entspräche, um diese sicher einbetten zu können. Insbesondere kann die Schichtdicke der elektrisch leitfähigen Deckschicht das 1,2-fache des Außendurchmessers der elektrischen Leiter betragen. Vorteilhaft ist die Schichtdicke der elektrisch leitfähigen Deckschicht jedoch gering genug, um die gewünschte außenseitige Rippenstruktur der fertigen Rohrleitung zu erzeugen. Die Gesamtschichtdicke der elektrisch leitfähigen Schichten, die vorteilhaft elektrisch leitfähige Kunststoffschichten sind, kann beispielsweise 0,1 bis 0,5 mm betragen, vorzugsweise etwa 0,5 bis 0,7 mm bei zu überdeckenden elektrischen Leitern mit einem jeweiligen Außendurchmesser von etwa 0,5 mm und einem Außendurchmesser der Rohrleitung von etwa 4 bis 10 mm. Der Außendurchmesser der elektrischen Leiter kann ferner 0,1 bis 1 mm betragen, insbesondere die bereits genannten 0,5 mm.

Durch das Vorsehen einer außenseitigen Rippenstruktur oder Wellenkontur der Rohrleitung ist neben dem Haft- bzw. Stoffschluss ein zusätzlicher Formschluss mit der umspritzten Anschlusskontur möglich, so dass die mechanischen Abzugskräfte deutlich erhöht werden gegenüber einer glatten Ausbildung der äußeren Oberfläche der Rohrleitung. Dementsprechend kann ein Trennen der Anschlusskontur von der Rohrleitung mit den daran befestigten elektrischen Zuleitern verhindert werden. Das Vorsehen der außenseitigen Rippenstruktur bzw. Wellenkontur der Rohrleitung führt zu einer Vergrößerung der Oberfläche, die dazu führt, dass eine besonders stabile und gegen ein Lösen der Anschlusskontur von der Rohrleitung sichere Verbindung geschaffen wird. Die gegenüber der glatten Ausbildung der Oberfläche der Rohrleitung abzugsfestere Verbindung der umspritzten Anschlusskontur und der mit außenseitiger Rippenstruktur versehenen Rohrleitung mit daran angefügten elektrischen Zuleitern verhindert ferner eine Beschädigung der Verbindung der elektrischen Zuleiter mit den elektrischen Leitern der Rohrleitung.

Zur thermischen Isolation kann die Rohrleitung mit zumindest einer von der umspritzten Anschlusskontur teilweise mit aufgenommenen die Rohrleitung zumindest teilweise umgebenden thermischen Isolationseinrichtung versehen sein, insbesondere einer hüllrohrförmigen und/oder schaumartigen Isolationseinrichtung. Die hüllrohrförmige Isolationseinrichtung kann insbesondere als Wellrohr und/oder Glattrohr ausgebildet sein. Die Rohrleitung kann somit mit zumindest einer thermischen Isolationseinrichtung, insbesondere einer hüllrohrförmigen und/oder schaumartigen Isolationseinrichtung, außenseitig zumindest teilweise versehen und die thermische Isolationseinrichtung in Anordnung um einen Teil der Rohrleitung herum mit in das Spritzgusswerkzeug eingelegt und in diesem umspritzt werden. Um zu vermeiden, dass durch ggf. nach dem Auffügen der thermischen Isolationseinrichtung auf die Rohrleitung bestehende Spalte nach dem Umspritzen mit der Anschlusskontur einen Durchtritt von Medium offen lassen, können zwischen Rohrleitung und thermischer Isolationseinrichtung Spaltdichtmittel vorgesehen werden, bevor ein Umspritzen mit der Anschlusskontur erfolgt. Ferner kann insbesondere eine hüllrohrförmige Isolationseinrichtung auf der Außenseite der mit der Rippenstruktur versehenen Rohrleitung angepresst werden, um mögliche Spalte, die sich aufgrund der Rippenstruktur zwischen der Innenseite der hüllrohrförmigen Isolationseinrichtung und der Außenseite der Rohrleitung ergeben, zu beheben bzw. so gering wie möglich zu gestalten und/oder abzudichten. Ferner kann eine Kalibrierung vor dem Umspritzen erfolgen, um die Spalte zu beheben bzw. um eine nach außen dichte Umspritzung auch in diesem Bereich der auf der Rohrleitung aufgefügten hüllrohrförmigen Isolationseinrichtung zu ermöglichen.

Vorteilhaft sind zum Erzeugen eines dichten stoffschlüssigen Verbundes die Materialien der Rohrleitung, einer äußeren Ummantelung der elektrischen Zuleiter und der Anschlusskontur miteinander verbindbar, insbesondere die gleichen Materialien sind oder zu einer gleichen Materialklasse gehören. Um die stoffschlüssige Verbindung der Anschlusskontur und der Rohrleitung sowie der Anschlusskontur und der elektrischen Zuleiter vorzusehen, also zum Erzeugen eines festen, z.B. mechanisch festen, gegen das Eindringen von Feuchtigkeit bzw. Medium dichten stoffschlüssigen Verbundes, werden vorteilhaft die Materialien von Rohrleitung und Anschlusskontur und einer äußeren Ummantelung der elektrischen Zuleiter und der Anschlusskontur zum Erzeugen des stoffschlüssigen Verbundes aufeinander abgestimmt ausgewählt. Die Verbindung kann derart stoffschlüssig sein, dass eine hohe mechanische Festigkeit geschaffen wird, wobei Grenzflächen der umspritzten Elemente der Rohrleitung und der äußeren Ummantelung der elektrischen Zuleiter beim Umspritzen aufgeschmolzen werden und sich beim Erstarren des Umspritzungsmaterials der Anschlusskontur fest verbinden. Bei dem bevorzugten mehrschichtigen Aufbau der Rohrleitungswandung sind vorteilhaft zumindest die Stirnflächen der äußersten und der innersten Schicht sowie die Außenfläche der äußersten Schicht stoffschlüssig mit dem Material der Anschlusskontur verbunden. Die Stirnfläche der einen oder mehreren zwischen diesen angeordneten inneren Schichten, wie der elektrisch leitfähigen Schicht, auf der die elektrischen Leiter angeordnet sind, können ebenfalls stoffschlüssig mit dem Material der Anschlusskontur verbunden sein bzw. werden. Dies ist jedoch nicht unbedingt erforderlich. Insbesondere bei Vorsehen eines Polyamids als Material der äußersten Schicht der Rohrleitung, insbesondere der elektrischen Isolationsschicht oder der elektrisch leitfähigen Deckschicht, kann auch das Material der Ummantelung der elektrischen Zuleiter aus Polyamid bestehen und ebenfalls das Material der Anschlusskontur, um hier eine optimale stoffschlüssige Verbindung der jeweiligen Verbindungs- bzw. Fügepartner Rohrleitung und Anschlusskontur bzw. Ummantelungsmaterial der elektrischen Zuleiter und Anschlusskontur vorzusehen. Beispielsweise kann als Polyamid PA12 verwendet werden. Dieses kann insbesondere auch als Material für die Innenschicht der Rohrleitung, also die medienbeständige Schicht der Rohrleitung, und auch die leitfähigen Schichten verwendet werden, wobei letztere durch Einbringen leitfähiger Stoffe Leitfähigkeit erhalten können, wie durch Einbringen von Leitruß, metallischen Pulvern oder anderen leitfähig machenden Füllstoffen. Die Anschlusskontur kann beispielsweise ebenfalls aus PA12 bestehen, wobei ggf. eine Faserverstärkung vorgesehen werden kann, wie eine Verstärkung durch Glasfasern, um die Festigkeit zu erhöhen. Beispielsweise kann daher PA12 GF30 als Material verwendet werden. Auch die Ummantelung der elektrischen Zuleiter besteht bei der vorstehenden Materialwahl insbesondere aus PA12. Sofern eine hüllrohrförmige Isolationseinrichtung zum Ummanteln der Rohrleitung vorgesehen ist und/oder eine elektrische Isolationsschicht als äußerste Schicht auf die Rohrleitung aufgebracht ist, kann diese ebenfalls aus Polyamid, beispielsweise PA12, bestehen, um eine optimale Verbindung mit dem Material der umspritzten bzw. zu umspritzenden Anschlusskontur eingehen zu können.

Weitere Materialpaarungen können beispielsweise Polypropylen (PP) oder Polyethylen (PE) zumindest für die jeweiligen in Kontakt tretenden Oberflächen der Rohrleitung und der Anschlusskontur bzw. der Ummantelung der elektrischen Zuleiter der Anschlusskontur und ggf. ebenfalls der hüllrohrförmigen Isolationseinrichtung sein. Ebenfalls ist es möglich, als Material zumindest der äußersten Schicht der Rohrleitung beispielsweise TPC, auch als TPE-E bezeichnet, also thermoplastisches Polyesterelastomer/thermoplastisches Copolyester zu verwenden, ebenfalls für die Ummantelung der elektrischen Zuleiter und eine ggf. vorgesehene hüllrohrförmige Isolationseinrichtung. Als Material für die Anschlusskontur kann in diesem Falle beispielsweise Polybutylenterephthalat (PBT), Polyethylenterephthalat (PET), Polycarbonat (PC) oder Acrylnitril-Butadien-Styrol (ABS) verwendet werden, wobei die vorstehenden Materialien jeweils glasfaserverstärkt sein können. Als Material zumindest für die äußere Schicht der Rohrleitung, die Ummantelung der elektrischen Zuleiter und eine eventuell vorgesehene hüllrohrförmige Isolationseinrichtung können ferner beispielsweise Polybutylenterephthalat (PBT) oder Polyethylenterephthalat (PET) verwendet werden. In diesem Falle eignet sich als Material für die Anschlusskontur beispielsweise Polybutylenterephthalat (PBT), Polyethylenterephthalat (PET), Polycarbonat (PC) oder Acrylnitril-Butadien-Styrol (ABS), wobei die vorstehenden Materialien ggf. glasfaserverstärkt sein können. Bei Verwendung von TPU, auch als TPE-U bezeichnet, also thermoplastischem Elastomer auf Urethanbasis als zumindest das äußerste Material der Rohrleitung, als Ummantelungsmaterial für die elektrischen Zuleiter und als Material für die ggf. vorgesehene hüllrohrförmige Isolationseinrichtung eignet sich als Material für die Anschlusskontur insbesondere Polybutylenterephthalat (PBT), Polyethylenterephthalat (PET), Polycarbonat (PC), Acrylnitril-Butadien-Styrol (ABS) oder Polyamid (PA), wobei die vorstehenden Materialien ggf. auch glasfaserverstärkt sein können. Bei Verwendung von TBV, auch als TPE-V bezeichnet, also einem vernetzten thermoplastischen Elastomer auf Olefinbasis als Material für zumindest die äußerste Schicht der Rohrleitung bzw. als Material für die Ummantelung der elektrischen Zuleiter und als Material für die ggf. vorgesehenen hüllrohrförmige Isolationseinrichtung eignen sich insbesondere Polypropylen (PP), Polyethylen (PE), Polyamid (PA), Polybutylenterephthalat (PBT) oder Polyoxymethylen (Polyacetal) (POM) als Materialien für die Anschlusskontur, wobei diese Materialien ggf. auch glasfaserverstärkt sein können. Für zumindest die äußerste Schicht der Rohrleitung, die Ummantelung der elektrischen Zuleitungen sowie als Material für die optional vorgesehene hüllrohrförmige Isolationseinrichtung kann ferner TPS, auch als TPE-S bezeichnet, also Styrol-Blockcopolymer, verwendet werden. Hierbei eignet sich als Material für die Anschlusskontur beispielsweise Polypropylen (PP), Polyethylen (PE), Polyamid (PA), Polybuthylenterephthalat (PBT) oder auch Polyoxymehylen (Polyacetal) (POM), wobei die vorstehenden Materialien ggf. auch glasfaserverstärkt sein können. Bei Ausbilden zumindest der äußersten Schicht der Rohrleitung, der Ummantelung der elektrischen Zuleiter und optional der hüllrohrförmigen Isolationseinrichtung aus TPA, auch als TPE-A bezeichnet, also aus thermoplastischem Copolyamid, eignet sich als Material für die Anschlusskontur insbesondere Polyamid. Alle Verbindungspartner also die äußerste Schicht der Rohrleitung, also insbesondere die elektrisch leitfähige Deckschicht oder die elektrische Isolationsschicht, die Ummantelung der elektrischen Zuleiter sowie die optional vorgesehene hüllrohrförmige Isolationseinrichtung und die Anschlusskontur können ferner aus Perfluor (Ethylen-Propylen-) Kunststoff (FEP), Perfluoralkoxyalkan (PFA), Ethylen-Tetrafluorethylen (ETFE) oder auch Polytetrafluorethylen (PTFE) bestehen. Ferner sind selbstverständlich auch andere Materialkombinationen möglich, die einen guten Stoffschluss der Verbindungspartner, also der Rohrleitung, der äußeren Ummantelung der elektrischen Zuleiter und der Anschlusskontur sowie optional der hüllrohrförmigen thermischen Isolationseinrichtung bzw. der äußeren elektrischen Isolationsschicht der Rohrleitung ermöglichen.

Um die Festigkeit und die Qualität der Materialverbünde zu erhöhen, können vor dem Umspritzen mit der Anschlusskontur die einzelnen Fügepartner, also die Rohrleitung und die äußere Ummantelung der jeweiligen elektrischen Zuleiter, zumindest teilweise zunächst konditioniert, insbesondere vorgewärmt und/oder mit zumindest einem Primer oder Haftvermittler versehen und/oder oberflächenaktiviert und/oder die Oberfläche mechanisch und/oder chemisch vergrößert und/oder mit zumindest einer einen Formschluss ermöglichenden Einrichtung versehen werden. Beispielsweise können die zu umspritzenden Komponenten der Rohrleitung und der äußeren Ummantelung der elektrischen Zuleiter bzw. zusätzlich der hüllrohrförmigen Isolationseinrichtung zumindest teilweise vorgewärmt werden, insbesondere auf eine Temperatur über der Glasübergangstemperatur. Dies kann z.B. durch Anlegen einer elektrischen Spannung an den in der Rohrwandung vorgesehenen elektrischen Leitern erfolgen, also unter Nutzen der rohrleitungseigenen Beheizungseinrichtung. Ferner kann eine Erwärmung von außen erfolgen, beispielsweise unter Zuhilfenahme von Infrarotstrahlung, Beflammen, Anordnen der Rohrleitung mit den elektrischen Zuleitern und ggf. der hüllrohrförmigen Isolationseinrichtung in einem Wärmeofen oder durch anderweitiges Vorkonditionieren. Eine Oberflächenaktivierung zumindest eines Abschnitts der Oberflächen der jeweiligen Fügepartner kann beispielsweise mittels Coronaverfahren, Plasmaverfahren oder Laser vorgesehen werden. Bei einer mechanischen Oberflächenvergrößerung kann beispielsweise zumindest ein Abschnitt der jeweiligen Oberfläche der Fügepartner angeraut bzw. angeschliffen, bei einer chemischen Oberflächenvergrößerung die jeweilig zu verbindenden Oberflächen der Fügepartner dementsprechend geätzt werden. Das vorstehend bereits erwähnte Vorsehen von Formschlüssen aufgrund der außenseitigen Rippenstruktur der Rohrleitung führt selbstverständlich ebenfalls bereits zu einer Vergrößerung von deren äußerer Oberfläche, so dass auch hierüber die Festigkeit des Materialverbunds von Rohrleitung und Anschlusskontur, wie bereits erwähnt, erhöht werden kann, wobei die Abzugskräfte steigen. Die Belastbarkeit und Robustheit der geschaffenen Verbindung von Rohrleitung mit daran angefügten elektrischen Zuleitern und der Anschlusskontur kann gegenüber herkömmlichen Verfahren durch die zusätzliche Nutzung von Formschlüssen sowie der weiteren vorstehend genannten Maßnahmen deutlich gesteigert werden, so dass die Gefahr eines Lösens der jeweiligen Fügepartner voneinander hierbei minimiert werden kann.

Als weiter vorteilhaft erweist es sich, die elektrischen Zuleiter vor dem Umspritzen mit der Anschlusskontur mit einer Kriechsperreinrichtung zu versehen, insbesondere die Litzen der elektrischen Zuleiter mit einer außenseitigen Beschichtung und/oder die äußere Ummantelung der elektrischen Zuleiter ein- oder mehrlagig mit einem Polyolefin Copolymer und/oder einem Polyamid zu versehen und/oder zumindest ein Kriechsperrelement mit dem jeweiligen elektrischen Zuleiter zu verbinden und zusammen mit diesem in die Anschlusskontur einzubetten. Die Kriechsperreinrichtung dient dazu, die Funktionalität der beheizbaren Medienleitung auch bei solchen Medien zu gewährleisten, die eine besonders hohe Kriechneigung aufweisen, wie insbesondere wässriger Harnstofflösung bzw. AdBlue®, die dementsprechend entlang den elektrischen Zuleitern kriechen und über diese zu den elektrischen Leitern innerhalb der Rohrwandung der Rohrleitung gelangen und diese zerstören könnten. Die Folge wäre der Ausfall der elektrischen Beheizbarkeit der Medienleitung. Als Polyolefin Copolymer eignet sich beispielsweise RADOX® der Firma Huber + Suhner. Ferner eignet sich ein Werkstoff, der auf PA12 basiert vor allem dann, wenn dieses Material insbesondere auch für die Anschlusskontur verwendet wird. Nicht nur die äußere Ummantelung der elektrischen Zuleiter, sondern auch die einzelnen Leiter bzw. Litzen der elektrischen Zuleiter können mit einer entsprechenden Beschichtung versehen werden, um das Eindringen von Öl, Wasser oder AdBlue® sowie anderen Fluiden in die elektrischen Zuleiter zu vermeiden. Eine außenseitige Isolierung in Form einer äußeren Ummantelung des jeweiligen elektrischen Zuleiters beispielsweise mit einem Polyolefin Polymer kann einlagig oder mehrlagig, beispielsweise zweilagig erfolgen, wobei sich die mehrlagige oder zweilagige Ausführungsform vor allem bei heißem Öl als durch die Rohrleitung strömendem Medium eignet.

Als Kriechsperre kann, wie vorstehend bereits erwähnt, auch ein Kriechsperrelement mit den elektrischen Zuleitern verbunden und zusammen mit diesen in die Anschlusskontur eingebettet werden. Hierbei erfolgt also eine indirekte Verbindung der elektrischen Zuleiter mit den elektrischen Leitern der Rohrleitung, wobei die freigelegten elektrischen Leiter der Rohrleitung mit dem Kriechsperrelement und das Kriechsperrelement bzw. die Kriechsperrelemente mit den elektrischen Zuleitern verbunden werden. Sowohl die Konnektierungsstelle der Kriechsperrelemente mit den elektrischen Leitern der Rohrleitung als auch die Konnektierungsstelle der Kriechsperrelemente mit den elektrischen Zuleitern wird vorteilhaft beim Umspritzen mit der Anschlusskontur in dieser aufgenommen, somit gegen das Eindringen von Feuchtigkeit bzw. Medium dicht in dieser eingeschlossen.

Weiter vorteilhaft kann die thermische Masse der Rohrleitung in dem mit der Anschlusskontur umspritzten Abschnitt der Rohrleitung kleiner oder gleich der angespritzten Masse der Anschlusskontur gewählt werden. Insbesondere erfolgt die Auswahl der thermischen Massen der Rohrleitung in dem umspritzten Abschnitt und der Anschlusskontur dahingehend, dass die angespritzte Masse der Anschlusskontur deutlich größer ist als die Masse der umspritzten Rohrleitung in dem umspritzten Abschnitt.

Vorzugsweise erstrecken sich zwei elektrische Leiter entlang der Längserstreckung der Rohrleitung gewendelt um diese herum. Dementsprechend werden vorzugsweise ein bis zwei Konnektierungsstellen je elektrischem Leiter vorgesehen zur Kontaktierung mit den elektrischen Zuleitern. Die Konnektierungsstellen für die einzelnen elektrischen Zuleiter können nebeneinander, also auf einer Seite der Rohrleitung liegend vorgesehen werden oder aber auch gegenüberliegend. Bei Durchlegen einer Symmetrieachse oder -ebene durch die Rohrleitung bzw. die sich entlang dieser gewendelt erstreckenden elektrischen Leiter erfolgt die Kontaktierung vorzugsweise in dieser Symmetrieebene bzw. im Bereich von dieser. Der Abstand zweier auf einer Seite der Rohrleitung nebeneinander angeordneter Konnektierungsstellen an den beiden elektrischen Leitern ist selbstverständlich abhängig von der jeweiligen Steigung und dem Abstand der Leiter voneinander. Der Abstand der Konnektierungsstellen kann z.B. 5 bis 40 mm betragen.

Um die Kontaktierung bzw. Konnektierung vornehmen zu können, werden die elektrischen Leiter von der Außenseite der Rohrleitung her freigelegt, wobei bei lediglich einer diese überdeckenden elektrisch leitfähigen Deckschicht nur diese entfernt wird, im Falle einer auf der elektrisch leitfähigen Deckschicht vorgesehenen Isolationsschicht diese ebenfalls mit entfernt werden muss, um die elektrischen Leiter kontaktieren zu können. Die Tiefe der Freilegung wird vorteilhaft dahingehend gewählt, dass die elektrischen Leiter freiliegen, also bis zu der unter diesen angeordneten Schicht, zumeist der ersten elektrisch leitfähigen Schicht.

Anstelle einer lediglich stellenweisen Freilegung von Konnektierungsstellen jeweils an den elektrischen Leitern kann auch eine streifenförmige (lineare) Freilegung erfolgen, die sich über einen größeren Bereich auf der Außenseite der Rohrleitung erstreckt, beispielsweise über einen Bereich von 5 bis 40 mm, in dem nicht nur die jeweiligen elektrischen Leiter freigelegt werden, sondern auch der Wandungsbereich der Rohrwandung zwischen diesen bis zu der unter den elektrischen Leiter angeordneten elektrisch leitfähigen Schicht.

Es ist zumindest eine Einrichtung zum stirnseitigen Abdichten der Rohrwandung vorgesehen. Diese kann insbesondere in Form zumindest eines zumindest der Wandstärke der Rohrwandung entsprechenden, mit zumindest der innersten Schicht der Rohrwandung stoffschlüssig verbundenen Wandungsteils der Anschlusskontur vorgesehen sein und/oder in Form eines Aufweitens eines Endbereichs der Rohrleitung und/oder in Form eines Reduzierens der Wandstärke der Rohrwandung in einem Endbereich. Durch das stirnseitige Abdichten der Rohrwandung kann verhindert werden, dass Medium, das durch die Rohrleitung strömt, an die Stirnseite der Rohrwandung gelangt und dort die elektrischen Leiter angreift. Neben einem Zersetzen der elektrischen Leiter könnte ferner das oftmals aggressive Medium bis in einen Kabelbaum gelangen und dort die elektrischen Leiter angreifen bzw. über die elektrischen Leiter des Kabelbaums zu weiteren Einrichtungen gelangen, mit denen dieser verbunden ist. Um dies zu vermeiden, erweist sich das stirnseitige Abdichten der Rohrwandung, die in der Anschlusskontur aufgenommen ist, als vorteilhaft. Das stirnseitige Abdichten kann dadurch erfolgen, dass ein Wandungsteil der Anschlusskontur stirnseitig an der Rohrwandung beim Spritzgussvorgang geschaffen wird und diese dementsprechend abdichtet. Dieser Wandungsteil ist stoffschlüssig mit den Schichten der Rohrwandung, insbesondere mit der innersten Schicht der Rohrwandung verbunden. Hierdurch kann ein Eindringen von Medium in den Grenzbereich zwischen der Stirnseite der Rohrwandung und den Wandungsteil der Anschlusskontur vermieden werden.

Die Wandstärke des stoffschlüssig stirnseitig mit zumindest der innersten Schicht der Rohrwandung verbundenen Wandungsteil der Anschlusskontur weist zumindest etwa die Wandstärke der Rohrwandung, also der alle Schichten umfassenden Gesamtrohrwandung, auf, vorzugsweise mehr als die doppelte Wandstärke der Gesamtrohrwandung. Bei einer Rohrwandungs-Wandstärke s von s = 1 bis 3mm kann dementsprechend die Wandstärke h des Wandungsteils der Anschlusskontur h = 2 bis 6mm betragen.

Zum verbesserten Stoffschluss zwischen dem Wandungsteil der Anschlusskontur und der Stirnseite der Rohrwandung kann ferner ein Beheizen der in das Spritzgusswerkzeug eingelegten Komponenten, insbesondere der Rohrleitung, und/oder des Teils des Spritzgusswerkzeugs, das im Endbereich der Rohrleitung angeordnet ist und mit dieser endseitig in Kontakt tritt, erfolgen. Insbesondere kann letzteres ein Dorn sein, der endseitig in die Rohrleitung eingeschoben wird, um eine Öffnung zum Austritt von Medium aus dem mit der Anschlusskontur umspritzten Endbereich der Rohrleitung offen zu halten.

Ein besonders guter Stoffschluss zwischen dem Endbereich der Rohrleitung und dem Material der Anschlusskontur ist ferner dadurch möglich, dass der Endbereich der Rohrleitung aufgeweitet wird, was auch als "Auftulpen" bezeichnet werden kann. Hierdurch ist es möglich, diesen aufgeweiteten Endbereich der Rohrleitung im Innern der Anschlusskontur aufzunehmen, diesen also allseitig zu umspritzen. Um dies zu ermöglichen, wird vor dem Spritzgussvorgang vorteilhaft ein Werkzeugdorn in das Innere der Rohrleitung in deren Endbereich eingeschoben, so dass zwischen dem aufgetulpten bzw. aufgeweiteten Endbereich der Rohrleitung und dem Werkzeugdorn ein Spalt verbleibt, der während des Umspritzens des Endbereichs der Rohrleitung mit der Masse gefüllt wird und somit ein allseitiges Umspritzen von diesem ermöglicht.

Ein weiteres Verbessern des Stoffschlusses zwischen dem Endbereich der Rohrleitung und der Masse der Anschlusskontur kann dadurch erfolgen, dass die Wandstärke in einem Endbereich der Rohrleitung reduziert wird. Die Reduktion erfolgt vorteilhaft von der Innenseite der Rohrwandung aus, so dass sich endseitig eine konische Formgebung ergibt. Insbesondere kann die Wandstärkenreduzierung sich lediglich auf die Reduzierung der Schichtdicke der innersten Schicht, der medienbeständigen Schicht, beziehen, ggf. auch auf die darüberliegende Schicht, insbesondere die erste elektrisch leitfähige Schicht der Rohrwandung. Die Reduktion kann kontinuierlich oder in Form eines Absatzes erfolgen, so dass eine Art Ausklinkung endseitig an der Rohrwandung vorgesehen wird, anstelle einer konisch zulaufenden Formgebung. In beiden Fällen ist eine Vergrößerung der zum Stoffschluss zur Verfügung stehenden Fläche möglich und insbesondere das Erzeugen eines Spaltes zwischen einem in den Endbereich der Rohrleitung eingefügten Werkzeugdorn und dem Endbereich der Rohrwandung, so dass auch hier wiederum der Spalt mit der Masse gefüllt und dadurch der Endbereich der Rohrleitung allseitig von der Masse der Anschlusskontur umspritzt und hier ein Eindringen von ggf. aggressivem später im Betrieb durch die Rohrleitung strömendem Medium geschützt werden kann. Um den ggf. sehr spitzwinklig zulaufenden Spalt optimal mit Umspritzmasse füllen zu können, kann das Umspritzen in diesem Bereich in mehreren Schichten, die jeweils sehr dünn sind, insbesondere 0,1mm betragen, erfolgen. Hierdurch lässt sich der geschaffene Spalt zwischen Werkzeugdorn und der Innenseite des Endbereichs der Rohrleitung sehr gut und dicht füllen.

Zur näheren Erläuterung der Erfindung werden im Folgenden Ausführungsbeispiele von dieser näher anhand der Zeichnungen beschrieben. Diese zeigen in:
- Figur 1: eine perspektivische Ansicht einer erfindungsgemäßen beheizbaren Medienleitung im Bereich ihrer Anschlusskontur,
- Figur 2: eine teilweise transparent gehaltende Seitenansicht der Anschlusskontur mit einem Teil der Rohrleitung der beheizbaren Medienleitung gemäß Figur 1,
- Figur 3: eine Seitenansicht einer erfindungsgemäßen Rohrleitung,
- Figur 4: eine Seitenansicht einer erfindungsgemäßen Rohrleitung mit zur Verdeutlichung gestrichelt angedeuteten Wendeln zweier elektrischer Leiter, noch ohne diese abdeckende Deckschicht,
- Figur 5: eine Längsschnittansicht einer mit drei Schichten versehenen erfindungsgemäßen Rohrleitung,
- Figur 6: eine Längsschnittansicht einer erfindungsgemäßen mit vier Schichten versehenen Rohrleitung,
- Figur 7: eine Seitenansicht einer erfindungsgemäßen Rohrleitung mit einem elektrischen Leiter, der in einem begrenzten Bereich zum Kontaktieren mit einem elektrischen Zuleiter freigelegt ist,
- Figur 8: eine Seitenansicht einer erfindungsgemäßen Rohrleitung mit zwei elektrischen Leitern, die zur Kontaktierung mit elektrischen Zuleitern an zwei Stellen freigelegt sind,
- Figur 9: eine Seitenansicht einer erfindungsgemäßen Rohrleitung, bei der ein länglicher Kontaktierungsbereich zum Verbinden der elektrischen Leiter mit elektrischen Zuleitern freigelegt ist,
- Figur 10: eine Seitenansicht der Rohrleitung gemäß Figur 7 mit daran angefügten elektrischen Zuleitern und mit konzentrisch die Rohrleitung über einen Teilbereich umgebendem Hüllrohr und mit angedeuteter umspritzter Anschlusskontur,
- Figur 11: eine seitliche Detailansicht einer zweiten Ausführungsvariante der Verbindung von Hüllrohr und Anschlusskontur,
- Figur 12: eine seitliche Prinzipsskizzenansicht einer erfindungsgemäßen Anschlusskontur mit darin angeordneter Rohrleitung, deren elektrische Leiter mit zwei elektrischen Zuleitern mit elektrischer Kriechsperre für diese verbunden sind,
- Figur 13: eine Seitenansicht einer erfindungsgemäßen Anschlusskontur mit angedeuteter Rohrleitung, wobei zwei elektrische Leiter der Rohrleitung mit Kriechsperrelementen verbunden sind, die mit elektrischen Zuleitern verbunden sind,
- Figur 14: eine teilweise Längsschnittansicht einer erfindungsgemäßen Anschlusskontur mit einer Rohrleitung einer erfindungsgemäßen beheizbaren Medienleitung,
- Figur 15: eine teilweise Längsschnittansicht einer erfindungsgemäßen Anschlusskontur mit einer endseitig aufgeweiteten Rohrleitung einer erfindungsgemäßen beheizbaren Medienleitung,
- Figur 16: eine teilweise Längsschnittansicht einer erfindungsgemäßen Anschlusskontur mit einer erfindungsgemäßen Rohrleitung, die eine endseitig auf der Innenseite abnehmende Wandungsstärke aufweist, und
- Figur 17: eine Detailansicht der Rohrleitung gemäß Figur 16

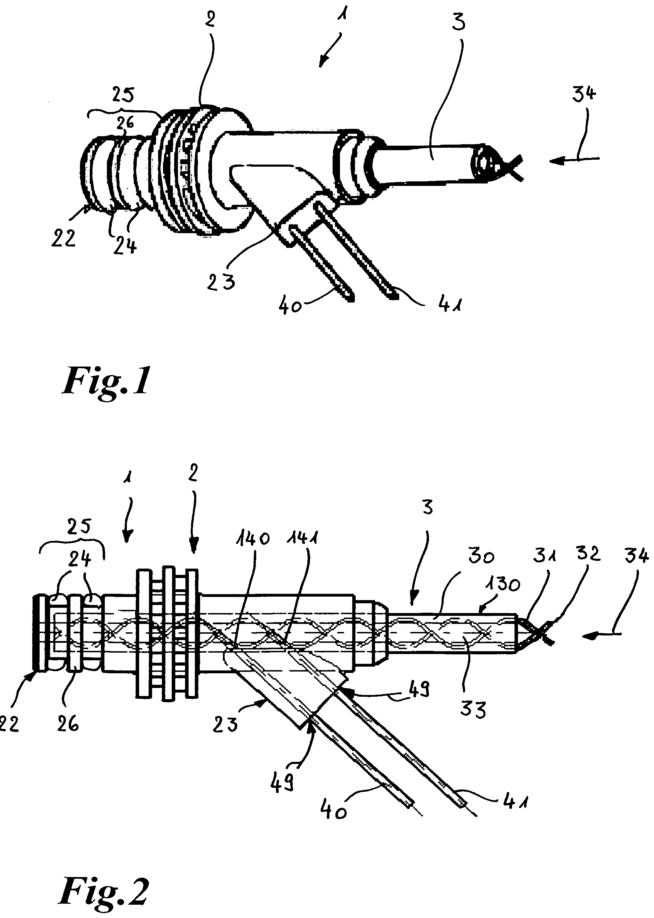

Figur 1 zeigt eine perspektivische Ansicht eines Teils einer beheizbaren Medienleitung 1 im Bereich von deren Anschlusskontur 2. Die Anschlusskontur 2 ist durch Umspritzen einer Rohrleitung 3 auf diese aufgefügt. Die Rohrleitung 3 dient dazu, Medium zu führen, kann daher auch als Medium- bzw. Medienleitung bezeichnet werden. Sie ist, wie besser Figur 2 entnommen werden kann, im Bereich ihrer Rohrwandung 30 mit zwei elektrischen Leitern 31, 32 versehen. Diese dienen im Zusammenwirken mit dem sie umgebenden elektrisch leitfähigen Kunststoff dazu, eine Beheizung der Rohrleitung zu ermöglichen, insbesondere für den Fall, dass das durch das innere Lumen 33 der Rohrleitung strömende oder strömbare Medium, das in Figur 1 und 2 durch den Pfeil 34 angedeutet ist, bereits im Lumen 33 der Rohrleitung gefroren ist oder einzufrieren droht.

Wie Figur 2 entnommen werden kann, sind die beiden elektrischen Leiter 31, 32 mit zwei elektrischen Zuleitern 40, 41 an Konnektierungsstellen 140, 141 konnektiert bzw. kontaktiert und die Konnektierungsstellen 140, 141 in der Anschlusskontur 2 mit umspritzt. Hierdurch wird ein Abdichten des Teils der in die Anschlusskontur 2 aufgenommenen elektrischen Zuleiter 40, 41 und somit auch der Konnektierungsstellen 140, 141 mit den elektrischen Leitern 31, 32 gegen ein Eindringen von Feuchtigkeit und/oder Medium von außerhalb der Anschlusskontur 2 in diese verhindert. Gerade Kondenswasser oder andere Feuchtigkeit könnte ansonsten an den Stellen, an denen die elektrischen Zuleiter 40, 41 in die Anschlusskontur 2 eintreten bzw. aus dieser austreten, in das Innere der Anschlusskontur 2 gelangen, wie durch Pfeile 49 in Figur 2 angedeutet. Zum Kontaktieren der elektrischen Leiter 31, 32 der Rohrleitung 3 werden diese an zumindest einer Stelle freigelegt und die elektrischen Zuleiter 40, 41 dort an den Konnektierungsstellen 140, 141 kontaktiert. Hierauf wird im Folgenden noch näher eingegangen. Wie insbesondere Figur 2 zu entnehmen ist, bildet die Anschlusskontur 2 als Umspritzkontur sowohl eine fluidische 22 als auch eine elektrische Anschlusskontur 23, da in dieser sowohl die elektrischen Zuleiter 40, 41 als auch die Rohrleitung 3 aufgenommen sind.

Auf der Außenseite der fluidischen Anschlusskontur 22 kann endseitig zumindest ein Dichtelement, insbesondere Dichtring 24, aufgebracht werden, um eine gute Abdichtung gegenüber einem Anschlussgegenstück, das dort angeschlossen wird, vorsehen zu können. Der in den Figuren 1 und 2 im Anschlussbereich 25 gezeigte Zwischenwulst 26 kann je nach Ausgestaltung der Kontur des Anschlussgegenstücks auch entfallen. Insbesondere in diesem Falle wird das Vorsehen lediglich eines Dichtelements 24 ausreichend sein.

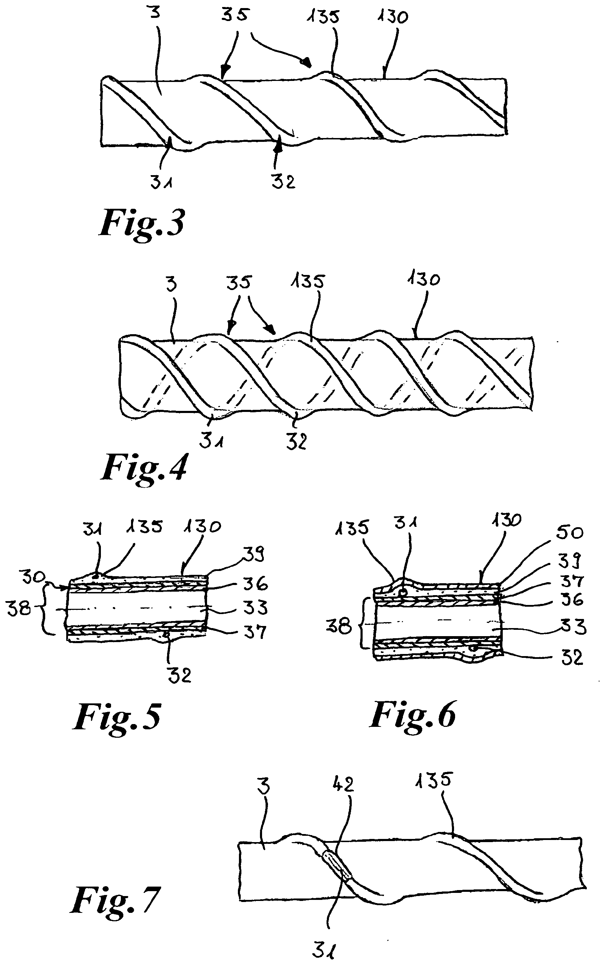

Um einen besonders guten Halt der Anschlusskontur auf der Außenseite der Rohrleitung 3 zu ermöglichen, ist diese mit einer außenseitigen Rippenstruktur 35 versehen, wie in den Figuren 3 bis 6 angedeutet ist. Hierdurch ist neben Kraft-, Haft- und Stoffschluss ein Formschluss der beiden Fügepartner der Rohrleitung 3 und der Anschlusskontur 2 möglich. Die Rippenstruktur 35 wird dadurch gebildet, dass die elektrischen Leiter 31, 32 auf der Außenseite 130 der Rohrwandung 30 der Rohrleitung 3 in Form von Rippen 135 erhaben vorkragen. Diese Formgebung kann bei der Herstellung der Rohrleitung insbesondere dadurch erzielt werden, dass beim Aufbringen der die elektrischen Leiter 31, 32 überdeckenden Schicht oder Schichten ein Vakuum um die Rohrleitung herum erzeugt wird, so dass sich diese äußeren Schichten oder Schicht eng an den elektrischen Leitern 31, 32 sowie der Schicht, auf der diese angeordnet sind, anlegen. Hierauf wird weiter unten noch etwas detaillierter eingegangen. Die Rohrleitung 3 wird somit, wie in den Figuren 5 und 6 angedeutet, dadurch zunächst mit einer medienbeständigen inneren Schicht 36 versehen, die das innere Lumen 33 der Rohrleitung 3 umgrenzt. Diese medienbeständige innere Schicht 36 tritt somit mit dem durch das innere Lumen 33 der Rohrleitung 3 strömende Medium in Kontakt und ist dementsprechend ausgebildet, um durch dieses nicht beschädigt zu werden und um ferner zu verhindern, dass das Medium durch die medienbeständige innere Schicht 36 hindurchtritt und insbesondere in die darüber liegenden Schichten gelangt. Über der medienbeständigen inneren Schicht 36 ist eine erste elektrisch leitfähige Schicht 37 angeordnet, wie den Figuren 5 und 6 entnommen werden kann. Die medienbeständige innere Schicht 36 und die erste elektrische leitfähige Schicht 37 bilden zusammen die Grund-Rohrleitung 38, auf der die Bewicklung mit den hier zwei elektrischen Leitern 31, 32 vorgesehen wird. Die beiden elektrischen Leiter 31, 32 erstrecken sich wendelförmig um die Grund-Rohrleitung 38 herum. Dies ist in Figur 4 angedeutet.

Die entsprechend umwickelte Grund-Rohrleitung 38 ist mit einer weiteren elektrisch leitfähigen Deckschicht 39 überzogen, wie ebenfalls den Figuren 5 und 6 entnommen werden kann. Die elektrisch leitfähige Deckschicht 39 kann zugleich die äußerste Schicht der Rohrleitung 3 sein, wie in Figur 5 angedeutet. Ebenfalls ist es möglich, diese mit einer elektrischen oder thermischen Isolationsschicht 50 außenseitig zu überdecken, die dann die äußerste Schicht der Rohrleitung 3 bildet. Dies ist in Figur 6 angedeutet.

Um die elektrisch leitfähige Deckschicht 39 eng anliegend sowohl auf der Grund-Rohrleitung 38 als auch den elektrischen Leitern 31, 32 vorzusehen, kann die mit den beiden elektrischen Leitern 31, 32 bewickelte Grund-Rohrleitung 38 zunächst erwärmt, beispielsweise beflammt, danach in ein Vakuum eingebracht werden, bevor die elektrisch leitfähige Deckschicht 39 aufextrudiert wird. Aufgrund des Vakuums legt sich diese während des Spritzvorgangs eng auf der Außenseite sowohl der beiden elektrischen Leiter 31, 32 als auch der Grund-Rohrleitung 38, somit auch der elektrisch leitfähigen Schicht 37 an. Das Ummanteln mit der elektrisch leitfähigen Deckschicht 39 kann beispielsweise im Querspritzverfahren erfolgen, bei dem quer zur Längserstreckung der Rohrleitung das Material der elektrisch leitfähigen Deckschicht 39 aufextrudiert wird. Die Schichtdicke der elektrisch leitfähigen Schicht 37 kann dabei beispielsweise 0,1 bis 0,2 mm betragen, während die Schichtdicke der elektrisch leitfähigen Deckschicht 39 etwa dem Außendurchmesser der elektrischen Leiter 31, 32 entsprechen oder auch etwas dicker sein kann, also z.B. um den Faktor 1,2 dicker. Die elektrischen Leiter 31, 32 können z.B. einen Außendurchmesser von 0,1 bis 1 mm, insbesondere 0,5 mm aufweisen. Die Gesamtwandstärke der Rohrleitung 3 kann z.B. 0,1 bis 2,5 mm, insbesondere 0,5 bis 0,7 mm betragen, bei einem Rohrleitungsdurchmesser von etwa 4 bis 10 mm.

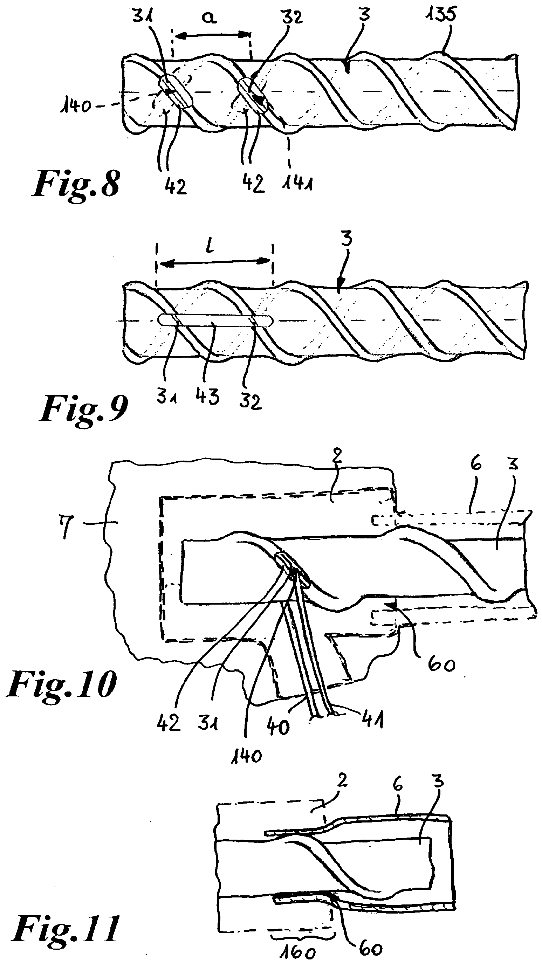

Um eine Kontaktierung der beiden elektrischen Leiter 31, 32 mit den beiden Zuleitern 40, 41 vornehmen zu können, werden die beiden elektrischen Leiter 31, 32 in einem begrenzten Bereich 42 bzw. 43 freigelegt. Dies ist in den Figuren 7 bis 9 angedeutet. Das Freilegen der beiden elektrischen Leiter 31, 32 im Kontaktierungsbereich 42 bzw. 43 kann beispielsweise mittels Lasers erfolgen. Auch andere Abtragverfahren sind möglich. Um die elektrischen Leiter 31, 32 stoffschlüssig mit den beiden elektrischen Zuleitern 40, 41 kontaktieren zu können, erfolgt die Freilegung der beiden elektrischen Leiter 31, 32 vorzugsweise bis etwa zur elektrisch leitfähigen Schicht 37. Dies ist in den Figuren 7 bis 9 angedeutet. Das Freilegen kann dabei bezüglich der beiden elektrischen Leiter 31, 32 auf zwei einander gegenüberliegenden Seiten der Rohrleitung 3 erfolgen, wie in Figur 7 angedeutet, wobei dort lediglich die eine Seite gezeigt ist, oder auf ein und derselben Seite nebeneinander liegend, wie in Figur 8 angedeutet oder aber auf ein und derselben Seite liegend in einem länglichen streifenförmigen Bereich, dem Kontaktierungsbereich 43, der sich nicht nur punktuell um den jeweiligen elektrischen Leiter 31, 32 herum erstreckt, wie der Kontaktierungsbereich 42, sondern auch den Bereich zwischen den beiden benachbarten elektrischen Leitern 31, 32 mit umfasst, wie in Figur 9 angedeutet. Beispielsweise sind ein bis zwei Kontaktierungsbereiche 42 bzw. Konnektierungsstellen je elektrischem Leiter 31, 32 zum Verbinden mit den elektrischen Zuleitern 40, 41 vorgesehen. Der Abstand a der möglichen Konnektierungsstellen 140, 141 gemäß Figur 8, wobei diese dort nur mit gestrichelten Linien angedeutet sind, wo die elektrischen Zuleiter 40, 41 angeschlossen werden, kann z.B. 5 bis 40 mm betragen und ist auch abhängig von dem Abstand der beiden elektrischen Leiter 31, 32 zueinander, die sich wendelförmig um die Grund-Rohrleitung 38 herum erstrecken. Dementsprechend kann der in Figur 9 gezeigte längliche Kontaktierungsbereich 43 ebenfalls beispielsweise eine Länge I von etwa 5 bis 40 mm aufweisen.

Ist die Rohrleitung 3 zwar mit der elektrisch leitfähigen Deckschicht 39, jedoch nicht mit einer außenseitigen elektrischen Isolationsschicht 50 versehen, wird entsprechend nur die elektrisch leitfähige Deckschicht 39 im Kontaktierungsbereich 42 bzw. 43 entfernt. Ist hingegen außenseitig auf der Rohrleitung 3 auch bereits die elektrische Isolationsschicht 50 angeordnet, werden diese sowie die elektrisch leitfähige Deckschicht 39 in dem jeweiligen Kontaktierungsbereich 42 bzw. 43 entfernt, um die Kontaktierung der beiden elektrischen Leiter 31, 32 mit den elektrischen Zuleitern 40, 41 vornehmen zu können. Im Falle der in Figur 5 gezeigten Rohrleitung, die keine außenseitige thermische und/der elektrische Isolierschicht 50 aufweist, kann eine thermische und/oder elektrische Isolation auch nachträglich noch aufgebracht werden. Hierbei kann insbesondere eine nachträgliche außenseitige Ummantelung mit einer thermischen und/oder elektrischen Isolationseinrichtung erfolgen.

Zur thermischen Isolation kann ein Hüllrohr 6 verwendet werden, wie in den Figuren 10 und 11 angedeutet. Dieses kann in Form eines Glattrohres und/oder Wellrohrs ausgebildet sein und einen Teil der Rohrleitung 3 umgeben. Die Anschlusskontur 2 umgibt, wie ebenfalls in den Figuren 10 und 11 angedeutet, nach dem Umspritzen bei Vorsehen des Hüllrohres 6 einen Teil von diesem, um dieses gegen das Eindringen von Feuchtigkeit und/oder Medium dicht nach außen abzudichten, so dass das durch die Rohrleitung 3 strömbare oder strömende Medium und Feuchtigkeit, wie Kondenswasser, nicht durch einen Spalt 60 zwischen Hüllrohr 6 und Rohrleitung 3 in das Innere der Anschlusskontur 2 und dort insbesondere nicht in den Bereich der Kontaktierungsstellen der elektrischen Leiter 31, 32 mit den elektrischen Zuleitern 40, 41 gelangt. Anderenfalls droht der Ausfall der elektrischen Beheizbarkeit der Rohrleitung.

In den Spalt 60 zwischen Hüllrohr 6 und Rohrleitung 3 kann ein Dicht- bzw. Spaltdichtmittel eingebracht werden, das jedoch in Figur 10 und 11 nicht gezeigt ist. Ferner kann das Hüllrohr 6 um die äußere Kontur der mit der Rippenstruktur 35 außenseitig versehenen Rohrleitung 3 aufgepresst und somit der Spalt 60 zwischen Hüllrohr 6 und Rohrleitung 3 soweit wie möglich minimiert werden. Der aufgepresste Abschnitt 160 des Hüllrohres 6, also der Abschnitt, der bezüglich seines Außendurchmessers gegenüber dem ursprünglichen bzw. sonstigen Außendurchmesser der Rohrleitung 3 reduziert ist, ist in der umspritzten Außenkontur 2 aufgenommen Diese Variante ist in Figur 11 gezeigt. Ferner ist ein geeignetes Kalibrieren möglich, um die Formgebung und Abmessungen des Hüllrohres 6 und der Rohrleitung 3 geeignet aneinander anzupassen, so dass das Entstehen von Spalten 60 so gut wie möglich minimiert oder abgedichtet werden kann.

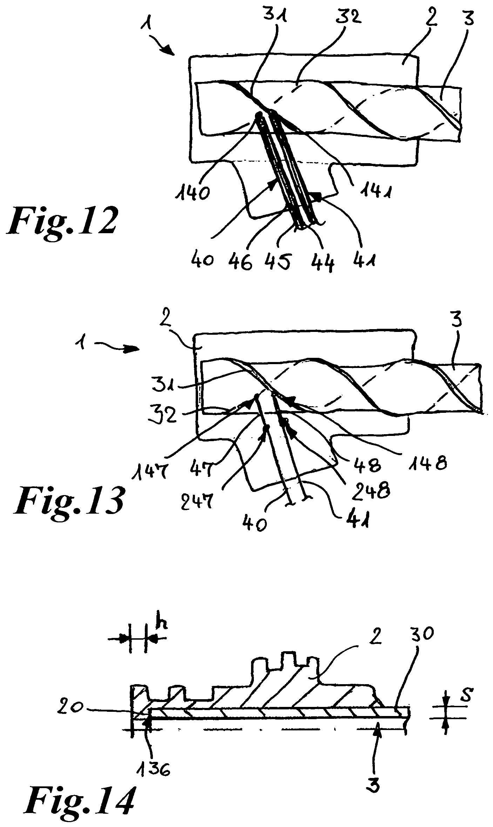

In den Figuren 12 und 13 sind zwei Ausführungsvarianten für Kriechsperreinrichtungen gezeigt, die ein Eindringen von Medium über die elektrischen Zuleiter 40, 41 verhindern sollen. Die in Figur 12 gezeigte Variante, bei der die elektrischen Zuleiter 40, 41 an den beiden elektrischen Leitern 31, 32 an den Konnektierungsstellen 140, 141 bereits stoffschlüssig befestigt sind, insbesondere durch Anlöten oder Anschweißen, ist dahingehend mit einer Kriechsperre versehen, dass die beiden elektrischen Zuleiter 40, 41 entweder im Bereich ihrer äußeren Ummantelung 44 oder jeweils um deren Litzen 45 herum, wie in Figur 12 lediglich angedeutet, mit einer Beschichtung 46 versehen sind, die als Kriechsperre dient. Hier eignet sich insbesondere ein Polyolefin Copolymer oder ein Polyamid. Eine derartige Beschichtung verhindert, dass Medium oder Feuchtigkeit, wie Kondenswasser, entlang den elektrischen Zuleitern 40, 41 kriechen und entsprechend zu dem ersten und zweiten elektrischen Leiter 31, 32 im Inneren der Rohrwandung 30 gelangen und diese dort beschädigen, insbesondere zum Ausfall der elektrischen Beheizbarkeit der Rohrleitung 3 führen kann.

Die in Figur 13 gezeigte Variante einer Kriechsperreinrichtung umfasst zwei Kriechsperrelemente 47, 48, die mit dem ersten und zweiten Leiter 31, 32 an Konnektierungsstellen 147, 148 verbunden sind. Mit den beiden Kriechsperrelementen 47, 48 sind die beiden elektrischen Zuleiter 40, 41 an Konnektierungsstellen 247, 248 verbunden. Die Kriechsperre wird in dieser Ausführungsvariante somit dadurch erzielt, dass keine direkte Verbindung der nach außen aus der Anschlusskontur 2 hinausragenden elektrischen Zuleiter 40, 41 und der elektrischen Leiter 31, 32 in der Rohrwandung 30 besteht, sondern zwischen die elektrischen Zuleiter 40, 41 und die elektrischen Leiter 31, 32 die Kriechsperrelemente 47, 48 zwischengefügt sind. Eine Verbindung der Kriechsperrelemente 47, 48 mit den elektrischen Leitern 31, 32 an den Konnektierungsstellen 147, 148 bzw. der Kriechsperrelemente 47, 48 mit den beiden elektrischen Zuleitern 40, 41 an den Konnektierungsstellen 247, 248 kann auch hier wiederum stoffschlüssig, also insbesondere durch Verlöten oder Verschweißen erfolgen.

Nach dem Fügen der, wie vorstehend beschrieben, freigelegten elektrischen Leiter 31, 32 und der elektrischen Zuleiter 40, 41, ggf. unter Zwischenfügen der Kriechsperrelemente 46, 47, wird die so vorbereitete Kombination aus Rohrleitung 3 und elektrischen Zuleitern 40, 41 in ein Spritzgusswerkzeug 7, das in Figur 10 nur angedeutet ist, eingelegt und insbesondere die elektrischen Zuleiter 40, 41 in der gewünschten Position angeordnet. Danach erfolgt ein Umspritzen mit der gewünschten Anschlusskontur 2, wie in Figur 10 angedeutet. Die durch das Umspritzen geschaffene Anschlusskontur 2 umschließt einerseits den medienführenden Teil der Rohrleitung 3 und andererseits den elektrischen Anschlussteil, also die elektrischen Zuleiter 40, 41, in ein und derselben Anschlusskontur 2. Ihre äußere Formgebung kann sich nach dem jeweiligen Anwendungsfall bzw. nach Kundenwünschen richten. In der Anschlusskontur 2 sind der medienführende und der elektrische Teil gegen ein Eindringen von Feuchtigkeit und/oder Medium dicht aufgenommen und gegen Beschädigung soweit wie möglich geschützt, insbesondere auch gegen ein Trennen der Anschlusskontur 2 von der Rohrleitung 3 und dabei ein Abtrennen auch der elektrischen Leiter 31, 32 von den Zuleitern 40, 41.

Vor dem Umspritzen können die Rohrleitung 3 und die äußere Ummantelung 44 der elektrischen Zuleiter 40, 41 konditioniert, insbesondere vorgewärmt und/oder mit zumindest einem Primer oder Haftvermittler versehen und/oder oberflächenaktiviert und/oder die Oberfläche mechanisch und/oder chemisch vergrößert werden, um einen noch besseren Halt des Umspritzmaterials zum Erzeugen der Anschlusskontur 2 auf der Rohrleitung 3 und der Ummantelung 44 der elektrischen Zuleiter 40, 41 zu ermöglichen.

Figur 14 zeigt eine teilweise Längsschnittansicht der Rohrleitung 3 mit angespritzter Anschlusskontur 2. Aus Vereinfachungsgründen ist die Rohrleitung 3 lediglich einschichtig dargestellt, weist jedoch im Prinzip insbesondere den in den Figuren 5 bzw. 6 gezeigten mehrschichtigen Aufbau auf. Die Rohrwandung 30 weist eine Gesamtwandstärke s auf. Stirnseitig ist die Rohrleitung 3 von der Anschlusskontur 2 ebenfalls umspritzt, wobei dort ein Wandungsteil 20 gebildet ist, die eine Wandstärke h aufweist. Das stoffschlüssige Verbinden der Rohrleitung 3 an deren Stirnseite 136 mit dem Material der Anschlusskontur 2 im Bereich auch des Wandungsteils 20 führt zu einem Abdichten der Rohrwandung 30 im Bereich ihrer Stirnseite 136. Dies ist sehr wichtig, um zu vermeiden, dass endseitig das durch die Rohrleitung 3 strömende Medium zu den in einer der Schichten der Rohrwandung 30 angeordneten elektrischen Leitern 31, 32 (siehe insbesondere Figur 5 und 6) gelangt und dort einerseits diese chemisch angreift bzw. zersetzt und andererseits über diese bis in einen Kabelbaum gelangt und diesen beschädigt und/oder mit diesem verbundene Einrichtungen.

Um eine gute Abdichtung vorzusehen, ist die Wandstärke h mindestens etwa gleich der Wandstärke s der Rohrwandung 30, vorzugsweise h ≥ 2s. Bei einer Rohrleitung 3 mit einer Wandstärke s der Rohrwandung 30 von s = 1 bis 3 mm, insbesondere s = 1,5 mm z.B. bei einem Rohrleitungsaußendurchmesser dₐ von 6 mm, kann die Wandstärke h des Wandungsteils 20 h = 2 bis 6 mm, insbesondere h = 3 bis 6mm betragen.

Für einen verbesserten Stoffschuss im Bereich der Stirnseite 136 der Rohrleitung 3 erweist sich ferner das Beheizen der in das Spritzgusswerkzeug 7 (siehe Figur 10) eingelegten Teile, hier in Form der Rohrleitung 3 und/oder des Spritzgusswerkzeugs 7, ggf. nur in einem Teilbereich, beispielsweise im Bereich eines Spritz- bzw. Werkzeugdorns des Spritzgusswerkzeugs, als vorteilhaft.

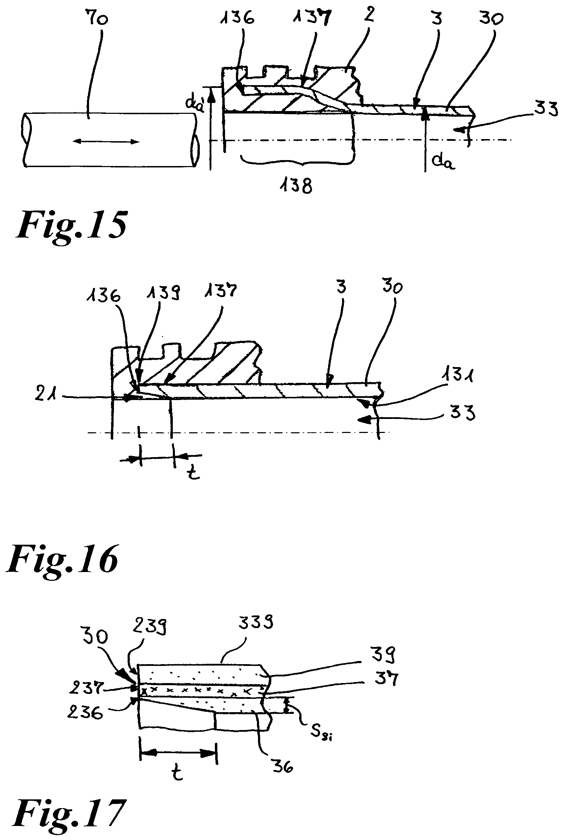

Um das Abdichten des Endbereichs 137 der Rohrleitung 3 weiter zu erleichtern und eine größere Fläche für einen Stoffschluss von Rohrleitung 3 und der Anschlusskontur 2 vorzusehen, kann, wie in Figur 15 gezeigt, dieser aufgetulpt, also der Durchmesser dₐ gegenüber dem Außendurchmesser dₐ der Rohrleitung 3 vergrößert sein. Der aufgetulpte Bereich 138 der Rohrleitung 3 kann dadurch vollständig umspritzt werden, so dass in jedem Falle die Stirnseite 136 sicher in der Masse der Anschlusskontur 2 aufgenommen und damit gegen einen Kontakt mit dem durch die Rohrleitung 3 strömbaren Medium abgedichtet ist. Um das innere Lumen 33 der Rohrleitung 3 auch beim Umspritzen des aufgetulpten Bereichs 138 aufrecht zu erhalten, kann ein Werkzeugdorn 70 in dieses vor dem Spritzvorgang eingeführt und nach diesem wieder entfernt werden. Dies ist in Figur 15 ebenfalls angedeutet.

Anstelle des Vorsehens eines aufgetulpten Bereichs 138 kann der Endbereich 137 mit einer in Richtung des Endes 139 der Rohrleitung 3 abnehmenden Wandstärke versehen sein, wie in den Figuren 16 und 17 gezeigt. Die Reduzierung der Wandstärke ist hier kontinuierlich gezeigt, kann jedoch auch gestuft, insbesondere durch Vorsehen lediglich einer Stufe bzw. eines Absatzes ausgebildet werden. Die Reduktion der Wandstärke erfolgt von der Innenseite 131 der Rohrleitung 3 her. Durch diese Formgebung des Endbereichs 137 der Rohrleitung 3 steht wiederum gegenüber der in Figur 14 gezeigten Ausführungsform eine größere Fläche für einen Stoffschluss zwischen Rohrleitung 3 und Anschlusskontur 2 zur Verfügung und die Abdichtung des Endbereichs 137 bzw. insbesondere der Stirnseite 136 der Rohrleitung 3 ist dadurch sehr gut möglich.

Wie Figur 17 besonders zu entnehmen ist, bezieht sich die Reduzierung der Wandstärke der Rohrwandung 30 vorteilhaft lediglich auf die innerste Schicht von dieser, die medienbeständige Schicht 36, ggf. teilweise auch auf die darüber liegende Schicht, hier die erste elektrisch leitfähige Schicht 37. Die Länge t des Endbereichs 137, in dem die Reduzierung der Wandstärke der Rohrwandung 30 vorgesehen ist, bestimmt die Größe der Fläche, die zusätzlich für den Stoffschluss zwischen Rohrleitung 3 und Anschlusskontur 2 zur Verfügung steht. In dem in Figur 17 gezeigten Beispiel wird die die Wandstärke s_{Si} der medienbeständigen Schicht 36 auf nahezu Null im Bereich der Stirnseite 236 der Schicht 36 reduziert. Das Umspritzungsmaterial zum Ausbilden der Außenkontur 2 wird auf die Stirnfläche 239 der äußersten Schicht 39, die Stirnseite 237 der mittleren Schicht 37 und die Stirnfläche 236 der innersten Schicht 36 aufgebracht und verbindet sich mit der Außenfläche 339 der äußersten Schicht 39 stoffschlüssig.

Um das innere Lumen 33 der Rohrleitung 3 gleichmäßig auch im umspritzten Endbereich 137 fortzuführen, kann während des Umspritzvorgangs, wie auch oben bezüglich des aufgetulpten Endbereichs der Rohrleitung 3 gemäß Figur 15 erwähnt, ein Werkzeugdorn 70 endseitig in die Rohrleitung 3 eingeschoben und nach dem Umspritzvorgang wieder entfernt werden (dies ist in Figur 16 und 17 nicht gezeigt). Die Schmelze der Spritzgussmasse kann hierdurch um die Innenseite des Endbereichs 137 herumgeführt und somit der sich zwischen dem Werkzeugdorn und dieser Innenseite ergebende Spalt 21 mit der Spritzgussmasse gefüllt werden. Beispielsweise kann der Spritzgussvorgang mehrschichtig erfolgen, z.B. in vier Schichten, die jeweils eine Schichtdicke von 0,1 mm aufweisen, um ein optimales Füllen des konisch zulaufenden Spalts 21 zwischen Werkzeugdorn 70 und Innenseite 131 des Endbereichs 137 der Rohrleitung 3 zu ermöglichen.

Die Anschlusskontur ist durch das Umspritzen unter Berücksichtigung der weiteren vorstehend genannten Maßnahmen somit mit dem medienführenden bzw. fluidischen Teil der beheizbaren Medienleitung und dem elektrischen Teil der elektrischen Zuleiter vorteilhaft stoff-, kraft- und formschlüssig verbunden.

Neben den im Vorstehenden beschriebenen und in Figuren gezeigten Ausführungsvarianten von beheizbaren Medienleitungen können noch zahlreiche weitere gebildet werden, bei denen jeweils die Anschlusskontur eine durch Umspritzen der Rohrleitung zusammen mit den mit deren elektrischen Leitern stoffschlüssig verbundenen elektrischen Zuleitern erzeugte fluidische und elektrische Anschlusskontur ist. Die Rohrleitung wird zusammen mit den elektrischen Zuleitern in einem Schritt im Umspritzverfahren mit einer gegen das Eindringen von Feuchtigkeit und/oder Medium dichten Verbindung zu der Anschlusskontur versehen und hierbei die elektrischen Zuleiter ebenso wie die Stirnseite der Rohrleitung ebenfalls gegen das Eindringen von Feuchtigkeit und/oder Medium dicht umschlossen.

### Bezugszeichenliste

- 1: beheizbare Medienleitung
- 2: Anschlusskontur
- 3: Rohrleitung
- 6: Hüllrohr
- 7: Spritzgusswerkzeug
- 20: Wandung
- 21: Spalt
- 22: fluidische Anschlusskontur
- 23: elektrische Anschlusskontur
- 24: Dichtring
- 25: Anschlussbereich
- 26: Zwischenwulst
- 30: Rohrwandung
- 31: erster elektrischer Leiter
- 32: zweiter elektrischer Leiter
- 33: inneres Lumen
- 34: Pfeil
- 35: Rippenstruktur
- 36: medienbeständige Schicht
- 37: erste elektrisch leitfähige Schicht
- 38: Grund-Rohrleitung
- 39: elektrisch leitfähige Deckschicht
- 40: elektrischer Zuleiter
- 41: elektrischer Zuleiter
- 42: Kontaktierungsbereich
- 43: länglicher Kontaktierungsbereich
- 44: äußere Ummantelung
- 45: Litze
- 46: Beschichtung als Kriechsperreinrichtung
- 47: Kriechsperrelement
- 48: Kriechsperrelement
- 49: Pfeil
- 50: elektrische Isolationsschicht
- 60: Spalt
- 70: Werkzeugdorn
- 130: Außenseite
- 131: Innenseite
- 135: Rippe
- 136: Stirnseite von 3
- 137: Endbereich
- 138: aufgetulpter Bereich
- 139: Ende von 3
- 140: Konnektierungsstelle
- 141: Konnektierungsstelle
- 147: Konnektierungsstelle
- 148: Konnektierungsstelle
- 160: aufgepresster Abschnitt
- 236: Stirnseite von 36
- 237: Stirnseite von 37
- 239: Stirnseite von 39
- 247: Konnektierungsstelle
- 248: Konnektierungsstelle
- 339: Außenfläche von 39
- a: Abstand zweier Konnektierungsstellen 140, 141
- l: Länge von 43
- s: Gesamtwandstärke von 30
- sₛᵢ: Wandstärke von 36
- h: Wandstärke von 20
- dₐ: Außendurchmesser von 3
- dₐ': aufgetulpter Außendurchmesser von 3
- t: Länge von 137

## Patentansprüche

1. Elektrisch beheizbare Medienleitung (1) mit einer Rohrleitung (3) mit zumindest zwei in deren Wandung eingebetteten elektrischen Leitern (31,32), elektrischen Zuleitern (40,41) und mit zumindest einer fluidischen Anschlusskontur (2), wobei die Anschlusskontur (2) um die Rohrleitung (3) zusammen mit den elektrischen Leitern (31,32) und Konnektierungsstellen (140,141,147,148,247,248) an den elektrischen Leitern (31,32), die dem Verbinden mit elektrischen Zuleitern (40,41) dienen, angeordnet ist, wobei die elektrischen Zuleiter zumindest eine Litze mit zumindest einer äußeren Ummantelung als Isolierung aufweisen,
wobei
die elektrischen Zuleiter (40,41) stoffschlüssig mit den Leitern (31,32) verbunden sind und die Anschlusskontur (2) eine fluidische und elektrische Anschlusskontur bildet, wobei die Anschlusskontur (2) die elektrischen Konnektierungsstellen (140,141,147,148,247,248), einen Abschnitt der elektrischen Zuleiter (40,41) und die Stirnseite der Rohrleitungswandung (30) stoffschlüssig gespritzt umschließt, wobei durch stoffschlüssiges Umspritzen von Rohrleitung (3) und den mit deren elektrischen Leitern (31,32) verbundenen elektrischen Zuleitern (40,41) eine stoffschlüssige Verbindung der erzeugten Anschlusskontur (2) geschaffen wird, wobei die Rohrleitung (3) durch das endseitige Umschließen mit der Anschlusskontur (2) auch stirnseitig abgedichtet ist, wobei zum stirnseitigen Abdichten der Rohrleitungswandung (30) zumindest ein zumindest der Wandstärke (s) der Rohrleitungswandung (30) entsprechender mit zumindest der innersten Schicht (36) der Rohrleitungswandung (30) stoffschlüssig verbundener Wandungsteil (20) der Anschlusskontur (2) vorgesehen ist und die Wandstärke (h) des stoffschlüssig stirnseitig mit zumindest der innersten Schicht (36) der Rohrleitungswandung (30) verbundenen Wandungsteils der Anschlusskontur (2) zumindest etwa die Wandstärke (s) der Rohrleitungswandung (30) aufweist.

2. Elektrisch beheizbare Medienleitung (1) nach Anspruch 1,
**dadurch gekennzeichnet, dass**
ein Reduzieren der Wandstärke (s) der Rohrwandung (10) in einem Endbereich (137) vorgesehen ist, insbesondere eine Reduktion der Wandstärke (s) der Rohrwandung (30) von deren Innenseite (131) aus, bei einer mehrschichtigen Rohrwandung (30) eine Reduktion der Wandstärke (s_{Si}) zumindest der innersten Schicht (36) der Rohrwandung (30) vorgesehen ist.

3. Elektrisch beheizbare Medienleitung (1) nach Anspruch 1 oder 2,
**dadurch gekennzeichnet, dass**
die Wandstärke (h) des stoffschlüssig stirnseitig mit zumindest der innersten Schicht (36) der Rohrwandung (30) verbundenen Wandungsteils der Anschlusskontur (2) mehr als die doppelte Wandstärke (s) der Rohrwandung (30), insbesondere die Rohrwandungs-Wandstärke (s) 1 bis 3 mm und die Wandstärke (h) des Wandungsteils der Anschlusskontur (2) 2 bis 6 mm beträgt.

4. Elektrisch beheizbare Medienleitung (1) nach einem der vorstehenden Ansprüche,
**dadurch gekennzeichnet, dass**
ein Aufweiten eines Endbereichs (138) der Rohrleitung (3) vorgesehen ist.

5. Elektrisch beheizbare Medienleitung (1) nach einem der vorstehenden Ansprüche,
**dadurch gekennzeichnet, dass**
zum Erzeugen einer hohen mechanischen Festigkeit Grenzflächen der umspritzten Elemente der Rohrleitung (3) und einer äußeren Ummantelung (44) der elektrischen Zuleiter (40,41) beim Umspritzen aufgeschmolzen werden und sich beim Erstarren des Umspritzungsmaterials der Anschlusskontur (2) fest verbinden, insbesondere bei einem mehrschichtigen Aufbau der Rohrleitungswandung (30) zumindest die Stirnflächen (236,239) der äußersten (39) und der innersten Schicht (36) sowie die Außenfläche (339) der äußersten Schicht (39) stoffschlüssig mit dem Material der Anschlusskontur (2) verbunden sind.

6. Elektrisch beheizbare Medienleitung (1) nach einem der vorstehenden Ansprüche,
**dadurch gekennzeichnet, dass**
zum Erzeugen eines dichten stoffschlüssigen Verbundes die Materialien der Rohrleitung (3), einer äußeren Ummantelung (44) der elektrischen Zuleiter (40,41) und der Anschlusskontur (2) miteinander verbindbar sind, insbesondere die gleiche Materialien sind oder zu einer gleichen Materialklasse gehören, und/oder die thermische Masse der Rohrleitung (3) in dem umspritzten Abschnitt kleiner oder gleich der angespritzten Masse der Anschlusskontur (2) ist.

7. Elektrisch beheizbare Medienleitung (1) nach einem der vorstehenden Ansprüche,
**dadurch gekennzeichnet, dass**
die Rohrleitung (3) eine außenseitige Rippenstruktur (35) oder Wellenkontur aufweist, insbesondere zum Erzeugen der Rippenstruktur (35) oder Wellenkontur die Rohrwandung (30) auf ihrer Außenseite (130) entlang dem Verlauf der elektrischen Leiter (31,32) erhaben vorkragende Rippen (135) oder Rillen bildet, insbesondere die Rippenstruktur (35) dadurch gebildet ist, dass beim Aufbringen der die elektrischen Leiter (31,32) überdeckenden Schicht oder Schichten ein Vakuum um die Rohrleitung (3) herum erzeugt wird, so dass sich diese äußeren Schichten oder Schicht eng an den elektrischen Leitern (31,32) sowie der Schicht, auf der diese angeordnet sind, anlegen.

8. Elektrisch beheizbare Medienleitung (1) nach einem der vorstehenden Ansprüche,
**dadurch gekennzeichnet, dass**
eine hüllrohrförmige Isolationseinrichtung zum Ummanteln der Rohrleitung (3) oder zumindest eines Abschnitts der Rohrleitung (3) vorgesehen ist und/oder eine elektrische Isolationsschicht als äußerste Schicht auf die Rohrleitung (3) aufgebracht ist und/oder zumindest eine von der umspritzten Anschlusskontur (2) teilweise mit aufgenommene, die Rohrleitung (3) zumindest teilweise umgebende thermische Isolationseinrichtung (6) vorgesehen ist, insbesondere eine hüllrohrförmige und/oder schaumartige Isolationseinrichtung, insbesondere die thermische Isolationseinrichtung in Form eines Hüllrohres (6) um die äußere Kontur der mit der Rippenstruktur (35) oder Wellenkontur außenseitig versehenen Rohrleitung (3) aufgepresst und ein Spalt (60) zwischen Hüllrohr (6) und Rohrleitung (3) soweit wie möglich minimiert und zumindest der aufgepresste Abschnitt (160) des Hüllrohres (6) in der umspritzten Außenkontur (2) aufgenommen ist.

9. Elektrisch beheizbare Medienleitung (1) nach einem der vorstehenden Ansprüche,
**dadurch gekennzeichnet, dass**
die elektrischen Zuleiter (40,41) mit einer Kriechsperreinrichtung (46,47,48) versehen sind, insbesondere die Litzen (45) der elektrischen Zuleiter (40,41) mit einer außenseitigen Beschichtung (46) versehen und/oder eine äußere Ummantelung (44) der elektrischen Zuleiter (40,41) ein- oder mehrlagig mit einem Polyolefin Copolymer und/oder einem Polyamid versehen und/oder zumindest ein Kriechsperrelement (47,48) mit dem jeweiligen elektrischen Zuleiter (40,41) verbunden und zusammen mit diesem in der Anschlusskontur (2) aufgenommen ist.

10. Verfahren zum Herstellen einer elektrisch beheizbaren Medienleitung (1) nach einem der vorstehenden Ansprüche, umfassend zumindest eine Anschlusskontur (2), wobei
- eine Rohrleitung (3) mit zumindest zwei eingebetteten elektrischen Leitern (31,21) vorgesehen und abgelängt wird,
- die elektrischen Leiter (31,32) freigelegt werden,
- elektrische Zuleiter (40,41) mit den freigelegten Leitern (31,32) stoffschlüssig verbunden werden,
- die Rohrleitung (3) mit angebrachten elektrischen Zuleitern (40,41) in ein Spritzgusswerkzeug (7) positioniert eingelegt werden, und
- eine fluidische und elektrische Anschlusskontur (2) im Spitzgusswerkzeug (7) erzeugt wird, wobei die Rohrleitungswandung (30) mit der durch endseitiges stoffschlüssiges Umspritzen aufgebrachten Anschlusskontur (2) auch stirnseitig umschlossen und abgedichtet wird und die Anschlusskontur (2) einen Abschnitt der elektrischen Zuleiter (40,41) dicht umschließt.

11. Verfahren nach Anspruch 10,
**dadurch gekennzeichnet, dass**
die elektrischen Leiter (31,32) bis zur elektrisch leitfähigen Schicht (37) der Rohrwandung (30) freigelegt werden, insbesondere auf zwei einander gegenüberliegenden Seiten der Rohrleitung (3) oder auf ein und derselben Seite nebeneinander in einem punktuell sich um den jeweiligen elektrischen Leiter (31,32) erstreckenden Kontaktierungsbereich (42) liegend oder auf ein und derselben Seite liegend in einem länglichen streifenförmigen, sich auch zwischen den beiden benachbarten elektrischen Leitern (31,32) erstreckenden Kontaktierungsbereich (43), insbesondere die elektrischen Leiter (31,32) im Kontaktierungsbereich (42,43) mittels Lasers freigelegt werden.

12. Verfahren nach Anspruch 10 oder 11,
**dadurch gekennzeichnet, dass**
die Rohrleitung (3) vor dem Umspritzen mit der Anschlusskontur (2) mit zumindest einer thermischen Isolationseinrichtung (6), insbesondere einer hüllrohrförmigen und/oder schaumartigen Isolationseinrichtung, zumindest teilweise außenseitig versehen wird, die mit der Rohrleitung (3) zusammen in das Spritzgusswerkzeug eingelegt und mit der Anschlusskontur (2) umspritzt wird.

13. Verfahren nach einem der Ansprüche 10 bis 12,
**dadurch gekennzeichnet, dass**
zum Schaffen eines besonders guten Stoffschlusses zwischen dem Endbereich (137) der Rohrleitung (3) und dem Material der Anschlusskontur (2) der Endbereich (137) der Rohrleitung (3) auf einen gegenüber dem sonstigen Außendurchmesser (dₐ) der Rohrleitung (3) vergrößerten Außendurchmesser (d_{a'}) aufgeweitet und dieser aufgeweitete Endbereich (138) der Rohrleitung (3) im Innern der Anschlusskontur (2) durch allseitiges Umspritzen aufgenommen wird, wobei zum allseitigen Umspritzen insbesondere in das Innere der Rohrleitung (3) zumindest in deren aufgeweiteten Endbereich (138) vor dem Spritzgussvorgang ein Werkzeugdorn (70) so eingeschoben wird, dass zwischen dem aufgeweiteten Endbereich (138) der Rohrleitung (3) und dem Werkzeugdorn (70) ein Spalt (21) verbleibt, der während des Umspritzens des Endbereichs (137) der Rohrleitung (3) mit der Spritzmasse gefüllt wird.

14. Verfahren nach einem der Ansprüche 10 bis 13,
**dadurch gekennzeichnet, dass**
zum Erzeugen eines festen dichten Verbundes die Materialien von Rohrleitung (3) und Anschlusskontur (2) und einer äußeren Ummantelung (44) der elektrischen Zuleiter (40,41) und der Anschlusskontur (2) zum Erzeugen eines stoffschlüssigen Verbundes aufeinander abgestimmt ausgewählt werden, insbesondere bei Vorsehen eines Polyamids als Außenmaterial der Rohrleitung (3), als Ummantelungsmaterial der elektrischen Zuleiter (40,41) und als Material der Anschlusskontur (2) verwendet wird, und/oder dass vor dem Umspritzen die Rohrleitung (3) und eine äußere Ummantelung (44) der elektrischen Zuleiter (40,41) zumindest teilweise konditioniert, insbesondere vorgewärmt und/oder mit zumindest einem Primer oder Haftvermittler versehen und/oder oberflächenaktiviert, insbesondere die Oberfläche mechanisch und/oder chemisch vergrößert, und/oder mit zumindest einer einen Formschluss ermöglichenden Einrichtung versehen wird.

15. Verfahren nach einem der Ansprüche 10 bis 14,
**dadurch gekennzeichnet, dass**
die elektrischen Zuleiter (40,41) vor dem Umspritzen mit der Anschlusskontur (2) mit einer Kriechsperreinrichtung (46,47,48) versehen werden, insbesondere die Litzen (45) der elektrischen Zuleiter (40,41) mit einer außenseitigen Beschichtung (46) und/oder die äußere Ummantelung (44) der elektrischen Zuleiter (40,41) ein- oder mehrlagig mit einem Polyolefin Copolymer und/oder einem Polyamid versehen wird und/oder zumindest ein Kriechsperrelement (47,48) mit dem jeweiligen elektrischen Zuleiter (40,41) verbunden und zusammen mit diesem in die Anschlusskontur (2) eingebettet wird.

## Claims

1. An electrically heatable media line (1) having a pipeline (3) having at least two electrical conductors (31, 32) embedded in its wall, electrical supply conductors (40, 41) and having at least one fluid connection profile (2), wherein the connection profile (2) is arranged around the pipeline (3) together with the electrical conductors (31, 32) and connecting points (140, 141, 147, 148, 247, 248) on the electrical conductors (31, 32), which serve for the connection to electrical supply conductors (40, 41), wherein the electrical supply conductors have at least one stranded wire having at least an outer sheathing as insulation,
wherein
the electrical supply conductors (40, 41) are connected to the conductors (31, 32) to form a material bond and the connection profile (2) forms a fluid and electrical connection profile (2), wherein the connection profile (2) surrounds the electrical connecting points (140, 141, 147, 148, 247, 248), a portion of the electrical supply conductors (40, 41) and the end face of the pipeline wall (30), injection moulded to form a material bond, wherein, by overmolding the pipeline (3), and the electrical supply conductors (40, 41) connected to its electrical conductors (31, 32), to form a material bond, a materially bonded connection of the generated connection profile (2) is created,
wherein the pipeline (3), as a result of being surrounded by the connection profile (2) at the end, is also sealed at the end face, wherein, for sealing the pipeline wall (30) at the end face, at least one wall part (20) of the connection profile (2) is provided that corresponds at least to the wall thickness (s) of the pipeline wall (30) and is connected to at least the innermost layer (36) of the pipeline wall (30) to form a material bond, and the wall thickness (h) of the wall part of the connection profile (2) that is connected to at least the innermost layer (36) of the pipeline wall (30) at the end face to form a material bond has at least approximately the wall thickness (s) of the pipeline wall (30).

2. The electrically heatable media line (1) according to Claim 1,
**characterised in that**
a reduction in the wall thickness (s) of the pipe wall (10) is provided in an end region (137), in particular a reduction in the wall thickness (s) of the pipe wall (30) starting from its inside (131); in the case of a multilayer pipe wall (30), a reduction in the wall thickness (s_{Si}) at least of the innermost layer (36) of the pipe wall (30) is provided.

3. The electrically heatable media line (1) according to Claim 1 or 2,
**characterised in that**
the wall thickness (h) of the wall part of the connection profile (2) that is connected to at least the innermost layer (36) of the pipe wall (30) at the end face to form a material bond is more than double the wall thickness (s) of the pipe wall (30), in particular the pipe-wall wall thickness (s) is 1 to 3 mm and the wall thickness (h) of the wall part of the connection profile (2) is 2 to 6 mm.

4. The electrically heatable media line (1) according to one of the preceding claims,
**characterised in that**
a widening of an end region (138) of the pipeline (3) is provided.

5. The electrically heatable media line (1) according to one of the preceding claims,
**characterised in that**,
to generate a high mechanical strength, boundary surfaces of the overmoulded elements of the pipeline (3) and an outer sheathing (44) of the electrical supply conductors (40, 41) are fused during the overmoulding process and are firmly joined during the hardening of the overmoulding material of the connection profile (2); in particular, in the case of a multilayer construction of the pipeline wall (30), at least the end faces (236, 239) of the outermost (39) and the innermost layer (36) and the outer surface (339) of the outermost layer (39) are connected to the material of the connection profile (2) to form a material bond.

6. The electrically heatable media line (1) according to one of the preceding claims,
**characterised in that**,
to generate a leak-tight materially bonded connection, the materials of the pipeline (3), an outer sheathing (44) of the electrical supply conductors (40, 41) and the connection profile (2) can be connected to one another, are in particular the same materials or belong to the same material class, and/or the thermal mass of the pipeline (3) in the overmoulded portion is less than or equal to the moulded-on mass of the connection profile (2).

7. The electrically heatable media line (1) according to one of the preceding claims,
**characterised in that**
the pipeline (3) has an external rib structure (35) or corrugated profile; in particular, for generating the rib structure (35) or corrugated profile, the pipe wall (30), on its outer side (130), forms ribs (135) or grooves protruding in a raised manner along the course of the electrical conductors (31, 32), in particular the rib structure (35) is formed **in that**, when the layer or layers covering the electrical conductor (31, 32) are applied, a vacuum is generated around the pipeline (3) so that these outer layers or layer lie(s) closely against the electrical conductors (31, 32) and the layer on which these are arranged.

8. The electrically heatable media line (1) according to one of the preceding claims,
**characterised in that**
an insulation device in the form of a cladding tube is provided for sheathing the pipeline (3) or at least a portion of the pipeline (3), and/or an electrical insulation layer is applied to the pipeline (3) as an outermost layer and/or at least one thermal insulation device (6), partially received by the overmoulded connection profile (2) and at least partially surrounding the pipeline (3), is provided, in particular an insulation device in the form of a cladding tube and/or a foam-like insulation device, in particular the thermal insulation device in the form of a cladding tube (6), is pressed around the outer profile of the pipeline (3) provided externally with the rib structure (35) or corrugated profile, and a gap (60) between the cladding tube (6) and the pipeline (3) is minimised to the greatest extent possible and at least the pressed-on portion (160) of the cladding tube (6) is received in the overmoulded outer profile (2).

9. The electrically heatable media line (1) according to one of the preceding claims,
**characterised in that**
the electrical supply conductors (40, 41) are provided with a creepage barrier device (46, 47, 48), in particular the stranded wires (45) of the electrical supply conductors (40, 41) are provided with an external coating (46) and/or an outer sheathing (44) of the electrical supply conductors (40, 41) is provided with a polyolefin copolymer and/or a polyamide in a single- or multi-layered form and/or at least one creepage barrier element (47, 48) is connected to the respective electrical supply conductor (40, 41) and, together with this, is received in the connection profile (2) .

10. A method for producing an electrically heatable media line (1) according to one of the preceding claims, comprising at least one connection profile (2), wherein
- a pipeline (3) having at least two embedded electrical conductors (31, 32) is provided and cut to length,
- the electrical conductors (31, 32) are exposed,
- electrical supply conductors (40, 41) are connected to the exposed conductors (31, 32) to form a material bond,
- the pipeline (3) with the mounted electrical supply conductors (40, 41) are placed in position in an injection moulding tool (7), and
- a fluid and electrical connection profile (2) is generated in the injection moulding tool (7), wherein the pipeline wall (30) with the connection profile (2) applied by overmoulding at the end to form a material bond are also surrounded and sealed at the end face and the connection profile (2) surrounds a portion of the electrical supply conductors (40, 41) in a leak-tight manner.

11. The method according to Claim 10,
**characterised in that**
the electrical conductors (31, 32) are exposed up to the electrically conductive layer (37) of the pipe wall (30), in particular located on two mutually opposing sides of the pipeline (3) or on one and the same side next to one another in a contacting region (42) extending point-by-point around the respective electrical conductor (31, 32) or located on one and the same side in an elongated strip-shaped contacting region (43) also extending between the two adjacent electrical conductors (31, 32), in particular the electrical conductors (31, 32) are exposed in the contacting region (42, 43) by means of lasers.

12. The method according Claim 10 or 11,
**characterised in that**
the pipeline (3), before being overmoulded with the connection profile (2), is provided at least partially externally with at least one thermal insulation device (6), in particular an insulation device in the form of a cladding tube and/or a foam-like insulation device, which, together with the pipeline (3), is placed in the injection moulding tool and overmoulded with the connection profile (2) .

13. The method according to one of Claims 10 to 12,
**characterised in that**,
to create a particularly good material bond between the end region (137) of the pipeline (3) and the material of the connection profile (2), the end region (137) of the pipeline (3) is widened to an outer diameter (dₐ) which is larger than the other outer diameter (dₐ) of the pipeline (3) and this widened end region (138) of the pipeline (3) is received in the interior of the connection profile (2) by all-round overmoulding, wherein, for the all-round overmoulding, a tool mandrel (70) is inserted in particular into the interior of the pipeline (3), at least in its widened end region (138), before the injection moulding procedure such that, between the widened end region (138) of the pipeline (3) and the tool mandrel (70), a gap (21) remains, which is filled by the injection moulding material during the overmoulding of the end region (137) of the pipeline (3).

14. The method according to one of Claims 10 to 13,
**characterised in that**,
to generate a secure leak-tight connection, the materials of the pipeline (3) and the connection profile (2) and an outer sheathing (44) of the electrical supply conductors (40, 41) and the connection profile (2) are selected in a coordinated manner to generate a materially bonded connection; in particular, when a polyamide is provided as the outer material of the pipeline (3), this is used as the sheathing material of the electrical supply conductors (40, 41) and as the material of the connection profile (2), and/or **in that**, before the overmoulding process, the pipeline (3) and an outer sheathing (44) of the electrical supply conductors (40, 41) are at least partially conditioned, in particular pre-heated and/or provided with at least one primer or adhesive agent and/or are surface activated, in particular the surface is mechanically and/or chemically enlarged and/or are provided with at least one device enabling form fit.

15. The method according to one of Claims 10 to 14,
**characterised in that**
the electrical supply conductors (40, 41), before being overmoulded with the connection profile (2), are provided with a creepage barrier device (46, 47, 48), in particular the stranded wires (45) of the electrical supply conductors (40, 41) are provided with an external coating (46), and/or the outer sheathing (44) of the electrical supply conductors (40, 41) is provided with a polyolefin copolymer and/or a polyamide in a single- or multi-layered form, and/or at least one creepage barrier element (47, 48) is connected to the respective electrical supply conductor (40, 41) and, together with this, is embedded in the connection profile (2).

## Revendications

1. Ligne de média chauffante électriquement (1), comprenant une conduite (3) comprenant au moins deux conducteurs électriques (31, 32) intégrés dans sa paroi, des lignes d'alimentation électrique (40, 41) et au moins un embout de connexion fluidique (2), dans laquelle l'embout de connexion (2) est agencé autour de la conduite (30) avec les conducteurs électriques (31, 32), et des points de connexion (140, 141, 147, 148, 247, 248) sur les conducteurs électriques (31, 32), permettant la connexion avec les lignes d'alimentation électrique (40, 41), dans laquelle les lignes d'alimentation électrique comprennent au moins une partie recouverte par au moins un revêtement d'isolation,
dans laquelle
les lignes d'alimentation électrique (40, 41) sont intégralement connectées aux conducteurs (31, 32) et l'embout de connexion (2) forme un embout de connexion fluidique et électrique, dans laquelle l'embout de connexion (2) est moulé par injection sur les points de connexion (140, 141, 147, 148, 247, 248), sur une partie des lignes d'alimentation électrique (40, 41) et sur la face d'extrémité de la paroi (30) de la conduite, dans laquelle le surmoulage de la conduite (3), des conducteurs électriques (31, 32) et des lignes d'alimentation électrique connectées (40, 41) forment un ensemble intégral de l'embout de connexion (2),
dans laquelle par sa jonction d'extrémité la conduite (3) est également scellée par sa face d'extrémité à l'embout de connexion (2), dans laquelle pour le scellement de la face d'extrémité de la paroi (30) au moins une partie de la paroi de l'embout de connexion (2) est reliée matériellement à au moins la couche la plus intérieure (36) de la paroi (30) de la conduite, et l'épaisseur (h) de la partie de paroi de l'embout de connexion (2) reliée matériellement avec au moins la couche la plus intérieure de la paroi (30) de la conduite, présente une épaisseur au moins approximativement égale à celle (s) de la paroi de la conduite (30).

2. Ligne de media chauffante électriquement (1) selon la revendication 1, **caractérisée en ce qu'**une réduction de l'épaisseur (s) de la paroi de conduite (10) est prévue dans une zone d'extrémité (137), en particulier une réduction de l'épaisseur (s) de la paroi de conduite (30) depuis l'intérieur (131) de celle-ci, dans le cas d'une paroi de conduite multicouche (30) une réduction de l'épaisseur (S_{Si}) la plus intérieure (36) de la paroi de conduite (30) est prévue.

3. Ligne de media chauffante électriquement (1) selon l'une des revendications 1 ou 2, **caractérisée en ce que** l'épaisseur de paroi (h) de la partie de paroi de l'embout de connexion (2) qui est raccordée matériellement à sa face d'extrémité avec la couche la plus intérieure (36) de la paroi (30) de la conduite, est égale à plus du double de l'épaisseur (s) de la paroi (30) de la conduite, en particulier l'épaisseur (s) de la paroi de la conduite est comprise entre 1 et 3 mm, et l'épaisseur (h) de la partie de paroi de l'embout de connexion (2) et comprise entre 2 et 6 mm.

4. Ligne de media chauffante électriquement (1) selon l'une quelconque des revendications précédentes, **caractérisée** en qu'un élargissement de la partie extrémité (138) de la conduite (3) est prévu.

5. Ligne de media chauffante électriquement (1) selon l'une quelconque des revendications précédentes, **caractérisée en ce que** pour obtenir une résistance mécanique élevée, les interfaces des éléments surmoulés de la conduite (3) et une enveloppe extérieure (44) des lignes d'alimentation électrique (40, 41) sont fusionnés et surmoulés lorsque le matériau de surmoulage de l'embout de connexion (2) se solidifie, en particulier dans le cas d'une structure multicouche de la paroi (30) de la conduite, au moins les faces d'extrémité (236, 239) de la couche la plus extérieure (39) et la couche la plus intérieure (36) ainsi que la surface externe (339) de la couche la plus extérieure (39) sont solidaires du matériau de l'embout de connexion (2).

6. Ligne de media chauffante électriquement (1) selon l'une quelconque des revendications précédentes, **caractérisée en ce que** pour réaliser un assemblage étanche, les matériaux de la conduite (3), une enveloppe extérieure (44) des lignes d'alimentation électrique (40, 41) et l'embout de connexion (2) sont reliés entre eux, et en particulier sont les mêmes matériaux ou appartiennent à la même classe de matériaux, et/ou la masse thermique de la conduite (3) dans la partie surmoulée est inférieure ou égale à la masse de l'embout de connexion (2).

7. Ligne de media chauffante électriquement (1) selon l'une quelconque des revendications précédentes, **caractérisée en ce que** la conduite (3) présente sur sa surface extérieure une structure nervurée (35) ou bien un contour ondulé, en particulier pour obtenir la structure nervurée (35) ou l'embout ondulé, la paroi (30) de la conduite présente sur sa face extérieure (130) des nervures saillantes (135) ou des rainures le long des conducteurs électriques (31, 32), en particulier la structure nervurée (35) est formée lorsque la ou les couches recouvrant les conducteurs électriques (31, 32) sont appliquées, un vide est créé autour de la conduite (3), de sorte que ces couches externes ou cette couche viennent serrer les conducteurs électriques (31, 32) sur la couche sur laquelle ils sont disposés.

8. Ligne de media chauffante électriquement (1) selon l'une quelconque des revendications précédentes, **caractérisée en ce qu'**un dispositif d'isolation en forme d'enveloppe est prévu pour gainer la conduite (3) ou au moins une partie de la conduite (3) et/ou une couche d'isolation électrique comme couche la plus extérieure sur la conduite (3) est appliquée, et/ou au moins un dispositif d'isolation thermique (6) est prévu, fourni partiellement par l'embout de connexion surmoulé (2) recouvrant au moins partiellement la conduite (3), en particulier un dispositif d'isolation de type en forme de revêtement tubulaire et/ou de mousse, en particulier le dispositif d'isolation thermique est en forme de revêtement tubulaire (6) pressé sur la surface extérieure de la conduite (30) présentant une structure nervurée (35) ou rainurée, et l'espace (60) entre le revêtement tubulaire (6) et la conduite (30) est réduit autant que possible, et au moins une partie (160) pressée du revêtement tubulaire (6) est reçue dans l'embout de connexion surmoulé (2).

9. Ligne de media chauffante électriquement (1) selon l'une quelconque des revendications précédentes, **caractérisée en ce que** les lignes d'alimentation électrique (40, 41) sont pourvues d'un dispositif anti-infiltration (46, 47, 48), en particulier des brins (45) des lignes d'alimentation électrique (40, 41) pourvus d'un revêtement extérieur (46) et/ou d'une enveloppe extérieure (44) des lignes d'alimentation électrique (40, 41) formée en une ou plusieurs couches de copolymère ou de polyoléfine et/ou de polyamide et/ou au moins un élément anti-infiltration (47, 48) est connecté à la ligne d'alimentation électrique respective (40, 41) et est reçu avec celle-ci dans l'embout de connexion (2).

10. Procédé de fabrication d'une ligne de média électriquement chauffante (1) selon l'une quelconque des revendications précédentes comprenant au moins un embout de connexion (2), dans lequel
- une conduite (3) avec au moins deux conducteurs électriques intégrés (31, 21) est prévue et coupée à longueur,
- les conducteurs électriques (31, 32) sont exposés,
- les lignes d'alimentation électrique (40, 41) sont connectées aux conducteurs exposés (31, 32) de manière à former un seul ensemble,
- la conduite (3) avec les lignes d'alimentation électrique attachées (40, 41) est positionnée dans un outil de moulage par injection (7), et
- un embout de connexion fluidique et électrique (2) est généré dans l'outil de moulage par injection (7), la paroi (30) de la conduite étant également enfermé et scellé sur sa face d'extrémité par l'embout de connexion (2) appliqué à l'extrémité par surmoulage, et l'embout de connexion (2) renferme de manière étanche une partie des lignes d'alimentation électrique (40, 41).

11. Procédé selon la revendication 10, **caractérisé en ce que** les conducteurs électriques (31, 32) sont exposés sur une zone de contact (42, 43) en particulier au moyen d'un laser jusqu'à une couche électriquement conductrice (37) de la paroi (30) de la conduite (30), en particulier sur deux côtés opposés de la conduite (3) ou sur un seul et même côté l'un à côté de l'autre dans une zone de contact (42) qui s'étend ponctuellement autour du conducteur électrique respectif (31, 32) ou sur une zone de contact allongée en forme de bande (43) qui s'étend en particulier entre les deux conducteurs électriques adjacents (31, 32).

12. Procédé selon l'une des revendications 10 ou 11, **caractérisé en ce qu'**avant le surmoulage avec l'embout de connexion (2), la conduite (3) est au moins partiellement pourvue sur sa surface extérieure d'au moins un dispositif d'isolation thermique (6), en particulier un dispositif d'isolation en forme de revêtement tubulaire et/ou de type mousse, qui est inséré avec la conduite (3) dans le moule d'injection et surmoulé avec l'embout de connexion (2).

13. Procédé selon l'une quelconque des revendications 10 à 12, **caractérisé en ce que** pour créer une liaison matérielle particulièrement bonne entre la zone d'extrémité (137) de la conduite (3) et le matériau de l'embout de connexion (2), la zone d'extrémité (137) de la conduite (3) est élargie à un diamètre supérieur à un autre diamètre extérieur (dₐ) de la conduite (3), et cette région d'extrémité élargie (138) de la conduite (3) est logée à l'intérieur de l'embout de connexion (2) par surmoulage sur tous les côtés, avec surmoulage en particulier à l'intérieur de la conduite (3), au moins dans sa région d'extrémité élargie (138), un mandrin d'outil (70) est inséré avant le processus de moulage par injection de telle sorte qu'un espace (21) entre la région d'extrémité élargie (138) de la conduite (3) et le mandrin d'outil (70) demeure, qui est rempli du composé de moulage pendant le surmoulage de la zone d'extrémité (137) de la conduite (3).

14. Procédé selon l'une quelconque des revendications 10 à 13, **caractérisé en ce que**, pour réaliser une liaison étanche, les matériaux de la conduite (3) et de l'embout de connexion (2) et d'une enveloppe extérieure (44) des lignes d'alimentation électrique (40, 41) et de l'embout de connexion (2) peuvent être sélectionnés pour se correspondre les uns aux autres afin de produire une liaison matérielle, en particulier un polyamide est utilisé comme matériau extérieur de la conduite (3), comme matériau de revêtement des lignes d'alimentation électrique (40, 41) et comme matériau de l'embout de connexion (2), et/ou avant le surmoulage, la conduite (3) et une enveloppe extérieure (44) des lignes d'alimentation électrique (40, 41) sont au moins partiellement conditionnés, notamment préchauffés et/ou avec au moins un primaire ou pourvu d'un promoteur d'adhésion et/ou activés en surface, en particulier la surface est agrandie mécaniquement et/ou chimiquement, et/ou est sont pourvus d'au moins un dispositif qui permet un ajustement de forme.

15. Procédé selon quelconque des revendications 10 à 14, **caractérisé en ce que** les lignes d'alimentation électrique (40, 41) sont pourvues d'un dispositif anti-infiltration (46, 47, 48) avant le surmoulage de l'embout de connexion (2), notamment des brins (45) des lignes d'alimentation électrique (40, 41) sont fournis avec un revêtement extérieur (46) et/ou une enveloppe extérieure (44) des ligne d'alimentation électrique (40, 41), en une ou plusieurs couches de copolymère de polyoléfine et/ou de polyamide et/ou au moins un élément anti-infiltration (47, 48) est connecté à la ligne d'alimentation électrique respective (40, 41) et est intégré avec celle-ci dans l'embout de connexion (2).
